# EUROPÄISCHE PATENTSCHRIFT

(11) **EP 4 154 699 B1**
(45) Veröffentlichungstag und Bekanntmachung des Hinweises auf die Patenterteilung: **28.01.2026**
(21) Anmeldenummer: 22184004.4
(22) Anmeldetag: 11.07.2022
(51) Int. Cl.: A01D 41/127

(54) **LANDWIRTSCHAFTLICHE ARBEITSMASCHINE MIT KENNFELDSTEUERUNG**
AGRICULTURAL MACHINE WITH PARAMETER CONTROL
MACHINE DE TRAVAIL AGRICOLE POURVU À COMMANDE DE CHAMP CARACTÉRISTIQUE

(30) Priorität: 28.09.2021 DE 102021125124
(43) Veröffentlichungstag der Anmeldung: 29.03.2023
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Neitemeier, Dennis, 59510 Lippetal (DE); Bormann, Bastian, 33334 Gütersloh (DE); Spiekermann, Sebastian, 48346 Ostbevern (DE); Irmer, Daniel, 33442 Herzebock-Clarholz (DE)
(74) Vertreter: CLAAS Gruppe

(56) Entgegenhaltungen:
- EP-A1- 3 075 224
- EP-A1- 3 858 129
- EP-A2- 2 401 905

## Beschreibung

Die Erfindung betrifft eine landwirtschaftliche Arbeitsmaschine eine Kennfeldsteuerung umfassend nach dem Oberbegriff des Anspruchs 1.

Aus dem Stand der Technik ist es hinlänglich bekannt, landwirtschaftliche Arbeitsmaschinen kennfeldbasiert zu steuern. Aus der EP 2 687 922 A2 ist eine Kennfeldsteuerung bekannt geworden, deren Kennfeld in regelmäßigen Abständen dadurch aktualisiert wird, dass gezielt Arbeitspunkte angefahren werden, die außerhalb des gerade durchlaufenden Kennfeldbereichs liegen. Da Kennfelder aus einer Vielzahl von Kennlinien bestehen und diese bestimmten mathematischen Zusammenhängen folgen beschreiben diese Kennlinien die Abhängigkeiten zwischen Einfluss- und Bewertungsgrößen immer nur in dem gerade durchlaufenen Arbeitsbereich relativ gut, während die Kurvenverläufe außerhalb dieser Bereiche häufig die realen Zusammenhänge nicht mehr hinreichend genau wiedergeben. Stellt sich nun ein aktueller Arbeitspunkt ein, der nicht in diesem gegenwärtig durchlaufenen Kennfeldbereich liegt, werden Einflussgrößen ermittelt, die nicht in einem optimierten Bereich liegen. Dies führt dazu, dass der Optimierungsprozess erst schrittweise wieder an optimale Werte der Einflussgrößen, wie etwa ein Kornverlust, herangeführt wird. Während dieser Zeit arbeitet die Optimierungsfunktion des Fahrerassistenzsystems nicht optimal. Das aus der EP 2 687 922 A2 bekannte Verfahren überwindet zumindest teilweise diese bekannten Nachteile hat aber selbst den Nachteil, dass das gezielte Anfahren bestimmter Arbeitspunkte den Optimierungsprozess für den Bediener der landwirtschaftlichen Arbeitsmaschine komplizierter gestaltet, da er aktiv eine Aktualisierung des hinterlegten Kennfeldes auslösen und steuern muss. EP 3 858 129 A1 betrifft ein Fahrerassistenzsystem zur Ansteuerung eines Schneidwerks, wobei das Fahrerassistenzsystem einen Speicher zum Hinterlegen von Daten und eine Rechenvorrichtung zur Verarbeitung der in dem Speicher hinterlegten Daten umfasst, wobei die Rechenvorrichtung dazu eingerichtet ist mittels zumindest einer Eingangsgröße mindestens einen Maschinenparameter autonom zu ermitteln und dem Schneidwerk vorzugeben.

Vor dem Hintergrund, dass die kennfeldbasierte Steuerung von landwirtschaftlichen Erntemaschine, wie etwa in DE 10 2015 113 527 A1, EP 3 075 223 B1, EP 2 401 905 beschrieben, an Bedeutung gewinnt besteht ein Bedarf die Aktualisierung der jeweiligen Kennfelder zu vereinfachen und zu beschleunigen.

In diesem Zusammenhang haben sich Fahrerassistenzsysteme etabliert, welche die Optimierung der Arbeitsweise der Prozessaggregate der landwirtschaftlichen Arbeitsmaschine mittels sogenannter Automaten, wie etwa aus DE 10 2018 111 076 oder EP 3 123 711 A1 bekannt geworden, steuern.

Es ist deshalb Aufgabe der Erfindung die beschriebenen Nachteile des Standes der Technik zu vermeiden und insbesondere eine Vorrichtung zur Aktualisierung Arbeitsaggregatparameter-optimierender Kennfelder vorzuschlagen, welches die Aktualisierung von Kennfeldern vereinfacht und beschleunigt.

Diese Aufgabe wird erfindungsgemäß durch eine landwirtschaftliche Arbeitsmaschine mit den kennzeichnenden Merkmalen des Anspruchs 1 gelöst.

Indem die landwirtschaftliche Arbeitsmaschine eine Kennfeldsteuerung umfasst und die Kennfeldsteuerung ein oder mehrere Kennfelder berücksichtigt und jedes Kennfeld eingerichtet ist, Arbeitsparameter der Prozessaggregate der landwirtschaftlichen Arbeitsmaschine zu optimieren, wobei das jeweilige Kennfeld als Initialkennfeld ausgeführt ist und in dem Initialkennfeld zumindest der Zusammenhang von Arbeitsparametern eines Prozessaggregats und Qualitätsparametern durch Initialarbeitspunkte beschrieben wird und dem jeweiligen Kennfeld eine Steuerkennlinie zugeordnet ist und die Steuerkennlinie im Bereich des Minimums oder Maximums des jeweiligen Qualitätsparameters liegt, wird sichergestellt, dass die Aktualisierung von Kennfeldern vereinfacht und beschleunigt werden kann, da der Optimierungsprozess entlang der ermittelten Steuerkennlinie geführt wird.

In einer vorteilhaften Ausgestaltung ist in diesem Zusammenhang vorgesehen, dass im Arbeitsbetrieb in Abhängigkeit von Messgrößen Momentan-Arbeitspunkte ermittelt werden, die Momentan-Arbeitspunkte in quasistationäre Arbeitspunkte umgerechnet werden und die ermittelten quasistationären Arbeitspunkte die Initialarbeitspunkte oder die bereits aktualisierten Arbeitspunkte des jeweiligen Kennfeldes überschreiben, wobei das Initialkennfeld in ein aktualisiertes Kennfeld gewandelt und eine aktualisierte Steuerkennlinie des aktualisierten Kennfeldes ermittelt wird. Dies hat insbesondere den Effekt, dass mittels einfacher Rechenverfahren unmittelbar im Erntebetrieb die Aktualisierung des Kennfeldes bewirkt werden kann, ohne dass hierfür spezielle Arbeitspunkte gezielt angefahren werden müssen.

In einer vorteilhaften Weiterbildung der Erfindung werden mittels der aktualisierten Steuerkennlinie optimierte Arbeitsparameter ermittelt und die jeweils optimierten Arbeitsparameter dem jeweiligen Prozessaggregat vorgegeben. Vor dem Hintergrund, dass die Kennfelder Parameterzusammenhänge in einem großen hier räumlichen Wertebereich beschreiben kann mittels der Steuerkennlinie die im Bereich des Minimums oder Maximums des jeweiligen Qualitätsparameters liegt ein einfaches Verfahren geschaffen werden, welches schnell zu optimierten Arbeitsparametern führt.

Indem die ermittelten Momentan-Arbeitspunkte in einer ersten Datenmatrix zwischengespeichert werden, wobei die Änderung des Wertes des jeweiligen Momentan-Arbeitspunktes innerhalb eines Zeitintervalls ermittelt wird und der Momentan-Arbeitspunkt dann in einen quasistationären Arbeitspunkt überführt wird, wenn sein Wert annährend unverändert, vorzugsweise konstant bleibt wird sichergestellt, dass die in das jeweilige Kennfeld zu übernehmenden Arbeitspunkte von ausreichender Qualität und damit wenig fehlerbehaftet sind. Weiterhin wird sichergestellt, dass quasistationäre Punkte die veraltet sind und nicht mehr die aktuelle Situation wiederspiegeln, verworfen werden.

In einer vorteilhaften Ausgestaltung der Erfindung werden die ermittelten quasistationären Arbeitspunkte in einer weiteren Datenmatrix gesammelt, wobei in der weiteren Datenmatrix eine bestimmte Anzahl quasistationärer Arbeitspunkte gesammelt werden, vorzugsweise vier quasistationäre Arbeitspunkte, und in dieser Datenmatrix für die gesammelten quasistationären Arbeitspunkte in Analogie zum jeweiligen Initialkennfeld zumindest die Abhängigkeiten zwischen einem Qualitätsparameter und einem Arbeitsparameter ermittelt werden. Dies hat insbesondere den Effekt, dass das jeweilige Kennfeld nicht permanent, sondern in akzeptablen Abständen aktualisiert wird, nämlich dann, wenn sich Arbeitsparameter signifikant ändern, sodass zudem die verfügbare Rechenleistung effizient genutzt wird.

In einer weiter vorteilhaften Ausgestaltung werden die in der weiteren Datenmatrix gesammelten quasistationären Arbeitspunkte in eine Initialdatenmatrix übernommen, wobei die Initialdatenmatrix dem Initialkennfeld mit übernommenen quasistationären Arbeitspunkten entspricht, sodass die Aktualisierung des eigentlichen Kennfeldes in einer Zwischendatenbank berechnet wird ohne dass dies Einfluss auf dasjenige Kennfeld nimmt nach welchem die landwirtschaftliche Arbeitsmaschine im laufenden Arbeitsbetrieb optimiert wird. In diesem Zusammenhang ist es deshalb auch von Vorteil, wenn sodann aus der Initialdatenmatrix in einem Kennfeldaktualisierungsschritt das aktualisierte Kennfeld berechnet wird, wobei das aktualisierte Kennfeld das Initialkennfeld oder ein zuvor aktualisiertes Kennfeld ersetzt und wobei in einem Schritt "Aktualisierung Steuerkennlinie" für jedes aktualisierte Kennfeld die Steuerkennlinie neu berechnet wird. Dies hat insbesondere den Effekt, dass die Kennfeld- und Steuerkennlinienaktualisierung desjenigen Kennfeldes nach welchem die landwirtschaftliche Arbeitsmaschine gesteuert wird in einem Schritt und in einem sehr kurzen Zeitraum eine Aktualisierung erfährt.

Ein besonders effektiv arbeitendes Fahrerassistenzsystem wird dann erreicht, indem die Kennfeldsteuerung in ein der landwirtschaftlichen Arbeitsmaschine zugeordnetes Fahrerassistenzsystem integriert ist, wobei in einem Speicher des Fahrerassistenzsystems die Kennfelder hinterlegt sind und eine Rechenvorrichtung dazu eingerichtet ist mittels der hinterlegten Kennfelder die Kennfeldsteuerung zu betreiben, und dass , in einer vorteilhaften Ausgestaltung der Erfindung, das Fahrerassistenzsystem weiter eingerichtet ist
a. die Messgrößen zu ermitteln
b. zumindest aus den ermittelten Messgrößen die Momentan-Arbeitspunkte abzuleiten
c. den Momentan-Arbeitspunkt in den quasistationären Arbeitspunkt umzurechnen
d. den quasistationären Arbeitspunkt an das jeweils hinterlegte Initialkennfeld oder das bereits aktualisierte Kennfeld zu übergeben
f. in dem jeweiligen Kennfeld einen Initialarbeitspunkt oder einen bereits aktualisierten Arbeitspunkt durch einen quasistationären Arbeitspunkt zu ersetzen
g. unter Berücksichtigung der eingefügten quasistationären Arbeitspunkte ein aktualisiertes Kennfeld zu berechnen
h. die Steuerkennlinie des aktualisierten Kennfeldes zu ermittelt
i. mittels der aktualisierten Steuerkennlinie optimierte Arbeitsparameter zu ermitteln
k. den jeweils optimierten Arbeitsparameter dem jeweiligen Prozessaggregat vorzugeben.

Das Initialkennfeld ist in einer Startkonfiguration in dem Fahrerassistenzsystem der landwirtschaftlichen Arbeitsmaschine hinterlegt oder wird vor einem Arbeitsbetrieb an dieses übergeben, wobei das Initialkennfeld im Arbeitsbetrieb zyklisch aktualisiert und als neues Initialkennfeld gespeichert wird.

Indem die landwirtschaftliche Arbeitsmaschine als landwirtschaftliche Erntemaschine ausgeführt ist und der Arbeitsbetrieb ein Erntebetrieb ist kann die Arbeitsqualität einer Erntemaschine im Erntebetrieb deutlich verbessert werden.

In einer vorteilhaften Ausgestaltung der Erfindung umfassen die Messgrößen die Längsschwingung und/oder die Querschwingung eines die landwirtschaftliche Erntemaschine durchlaufenden Erntegutstromes und/oder die Bestandshöhe und/oder den Hydraulikdruck oder Leistungsbedarf eines Haspelantriebsmotors und wobei die Messgrößen in Qualitätsparameter oder einen Erntegutdurchsatz umgerechnet werden, sodass alle die Arbeitsqualität der landwirtschaftlichen Arbeitsmaschine maßgeblich beeinflussenden Randbedingungen umfassend berücksichtigt werden.

Ein besonders effizienter Optimierungsprozess für die Arbeitsweise der landwirtschaftlichen Erntemaschine ergibt sich dann, wenn ein oder mehrere Prozessaggregate zusammen mit dem Fahrerassistenzsystem einen Prozessaggregatautomat bilden, indem im Speicher des Fahrerassistenzsystems die Kennfelder hinterlegt sind und die Rechenvorrichtung dazu eingerichtet ist mittels der hinterlegten Kennfelder den Prozessaggregatautomat als Kennfeldsteuerung zu betreiben und der Prozessaggregatautomat eingerichtet ist, Arbeitsparameter des oder der Prozessaggregate zu optimieren und die optimierten Arbeitsparameter dem jeweiligen Prozessaggregat vorzugeben. In diesem Zusammenhang ist von Vorteil, wenn der Prozessaggregatautomat als Vorsatzgeräteautomat und/oder Bandschneidwerkautomat und/oder als Dreschautomat und/oder als Abscheideautomat und/oder als Reinigungsautomat und/oder als Häckselautomat und/oder als Verteilautomat ausgebildet sein kann und jeder der Prozessaggregatautomaten Teilautomaten ausbilden kann, wobei jeder der Teilautomaten eingerichtet ist Arbeitsparameter eines Prozessaggregates zu optimieren und die optimierten Arbeitsparameter dem jeweiligen Prozessaggregat vorzugeben. Auf diese Weise wird eine umfassende Optimierung der Arbeitsqualität der landwirtschaftlichen Arbeitsmaschine sichergestellt.

Indem das eine oder die mehreren dem jeweiligen Prozessaggregatautomaten oder dem jeweiligen Teilautomaten zugeordneten Kennfelder den Zusammenhang von Arbeitsparametern eines Prozessaggregats und Qualitätsparametern beschreiben wird sichergestellt, dass der Einfluss jedes einzelnen Prozessaggregates auf die Gutflussoptimierung in der landwirtschaftlichen Erntemaschine gezielt gesteuert werden kann.

Den wesentlichsten Einfluss auf die Bewegung eines Erntegutstroms durch eine landwirtschaftliche Erntemaschine hat der Erntegutdurchsatz, wobei sehr hohe oder sehr niedrige Erntegutdurchsätze häufig Störungen im Gutfluss innerhalb des Erntevorsatzes und der landwirtschaftlichen Erntemaschine hervorrufen. Daher ist es von besonderem Vorteil, wenn das jeweilige Kennfeld einen den Erntegutdurchsatz repräsentierenden Parameter, vorzugsweise die Schichthöhe, berücksichtigt.

In einer weiteren vorteilhaften Ausgestaltung der Erfindung ist vorgesehen, dass der oder die Qualitätsparameter des einen oder der mehreren Kennfelder ein Schwingungskoeffizient und/oder ein Abscheideverlust sind, wobei der Schwingungskoeffizient ein Indikator für die Schichthöhenschwankungen und damit für einen inhomogenen Gutfluss ist, während der Abscheideverlust ein wesentlicher, die Arbeitsqualität eines Mähdreschers beschreibender Parameter ist, wobei zunehmende Abscheideverluste auch ein Hinweis auf einen nicht optimalen Gutfluss des Erntegutstromes durch den Mähdrescher sind.

Indem der Schwingungskoeffizient eine Schwankung des Erntegutdurchsatzes beschreibt und Mittel vorgesehen sind, die einen Erntegutdurchsatz und den die Schwankung des Erntegutdurchsatzes beschreibenden Schwingungskoeffizient in einem vor den Dreschorganen der landwirtschaftlichen Erntemaschine liegenden Bereich ermitteln, wird in einer vorteilhaften Weiterbildung der Erfindung sichergestellt, dass der einen inhomogenen Gutfluss am eindeutigsten beschreibende Parameter bei der Optimierung des Gutflusses im Erntevorsatz maßgebend berücksichtigt wird. Indem der Schwingungskoeffizient zudem in einem vor den Dreschorganen liegenden Bereich ermittelt wird kann zudem der die Gutstromstruktur völlig verändernde Einfluss der Dreschorgane ausgeschlossen werden.

In einer vorteilhaften Weiterbildung der Erfindung beschreibt daher das jeweilige Kennfeld den jeweiligen Arbeitsparameter in Abhängigkeit vom Schwingungskoeffizienten und der den Erntegutdurchsatz repräsentierenden Schichthöhe. In diesem Zusammenhang ist es daher auch von Vorteil, wenn in einer weiteren Ausgestaltungsvariante das jeweilige Kennfeld den oder die zu optimierenden jeweiligen Arbeitsparameter zumindest in Abhängigkeit vom Abscheideverlust beschreibt.

Eine effiziente Kennfeldsteuerung ergibt sich in einer Ausgestaltung dann, wenn das Kennfeld den Zusammenhang zwischen dem Qualitätsparameter Schwingungskoeffizient, dem den Erntegutdurchsatz repräsentierenden Parameter Schichthöhe und einem Arbeitsparameter beschreibt und die dem Kennfeld zugeordnete Steuerkennlinie im Bereich des Minimums des Schwingungskoeffizienten liegt.

Eine effiziente Kennfeldsteuerung ergibt sich in einer Ausgestaltung auch dann, wenn der Prozessaggregatautomat als Bandschneidwerkautomat ausgeführt ist und das Kennfeld den Zusammenhang zwischen dem Qualitätsparameter Schwingungskoeffizient, dem den Erntegutdurchsatz repräsentierenden Parameter Schichthöhe und dem Arbeitsparameter "Bandgeschwindigkeit Mittenband" oder dem Arbeitsparameter "Bandgeschwindigkeit rechtsseitiges und/oder linksseitiges Querförderband" oder dem Arbeitsparameter Haspelhorizontalposition und/oder Haspelvertikalposition beschreibt und die dem jeweiligen Kennfeld zugeordnete Steuerkennlinie im Bereich des Minimums des Schwingungskoeffizienten liegt.

In einer vorteilhaften Ausgestaltung der Erfindung sind die eine oder die mehreren erfindungsgemäßen Kennfelder so beschaffen, dass sie den Zusammenhang von Arbeitsparametern eines Prozessaggregats und Qualitätsparametern beschreiben. In diesem Zusammenhang ist es von Vorteil, wenn jedem Teilautomaten ein oder mehrere Kennfelder zugeordnet sind, wobei das eine oder die mehreren Kennfelder zumindest den Zusammenhang von Arbeitsparametern des dem jeweiligen Teilautomaten zugeordneten Prozessaggregats und Qualitätsparametern beschreiben. Auf diese Weise wird es möglich, dass jedes Prozessaggregat des Bandschneidwerks ganz spezifisch gesteuert werden kann, da erfahrungsgemäß die einzelnen Prozessaggregate ganz unterschiedlichen Einfluss auf den Gutfluss im Bandschneidwerk haben.

Vor dem Hintergrund, dass ein nicht optimaler Gutfluss im Erntevorsatz und der landwirtschaftlichen Erntemaschine auch negative Auswirkungen auf den Abscheideverlust hat ist in einer vorteilhaften Ausgestaltung der Erfindung vorgesehen, dass das Kennfeld den Zusammenhang zwischen dem Qualitätsparameter Abscheideverlust und einem oder mehreren Arbeitsparametern beschreibt und die dem Kennfeld zugeordnete Steuerkennlinie im Bereich des Minimums des Abscheideverlusts liegt. In diesem Zusammenhang ist es auch von Vorteil, wenn der Prozessaggregatautomat als Bandschneidwerkautomat ausgeführt ist und das Kennfeld den Zusammenhang zwischen dem Qualitätsparameter Abscheideverlust, dem den Erntegutdurchsatz repräsentierenden Parameter Hydraulikdruck oder Leistungsbedarf eines Haspelantriebsmotors/ Haspelantriebszylinders und dem Arbeitsparameter Haspelhorizontalposition und/oder Haspelvertikalposition beschreibt und die dem Kennfeld zugeordnete Steuerkennlinie im Bereich des Minimums des Abscheideverlusts liegt.

Je mehr Arbeitsparameter einer landwirtschaftlichen Erntemaschine mittels der erfindungsgemäßen Kennfeldadaption optimiert werden umso höher ist die Arbeitsqualität der jeweiligen Erntemaschine. Daher ist in einer vorteilhaften Ausgestaltung der Erfindung vorgesehen, dass die zu optimierenden Arbeitsparameter die Arbeitsparameter Schnittgeschwindigkeit, Messerhub, Bandgeschwindigkeit, Einzugswalzenhorizontalposition, Einzugswalzendrehzahl, Haspelvertikalposition, Haspelhorizontalposition, Dreschtrommeldrehzahl, Größe des Dreschspaltes, Umlenktrommeldrehzahl, Rotordrehzahl, Schwingfrequenz und Schwingungsrichtung der Siebebenen, Gebläsedrehzahl, Drehzahl des Strohhäckslers, Drehzahl der Verteileinrichtung und Abgabepunkt der Verteileinrichtung umfassen können.

Indem in einer vorteilhaften Ausgestaltung die Anpassung des jeweiligen Kennfeldes in Abhängigkeit vom Schwingungskoeffizienten eine schnelle, eine dynamische Anpassung des jeweiligen Kennfeldes bewirkt während die Anpassung des jeweiligen Kennfeldes in Abhängigkeit vom Abscheideverlust eine langsame, eine träge Anpassung des jeweiligen Kennfeldes bewirkt kann sichergestellt werden, dass der Einfluss sowohl kurzfristiger als auch langfristiger Effekte bei der Optimierung der Arbeitsparameters des Bandschneidwerks berücksichtigt wird.

Um den Einfluss kurzfristiger und langfristiger Effekte auf die Optimierung eines Arbeitsparameters hinreichend zu berücksichtigen ist in einer weiteren vorteilhaften Ausgestaltung der Erfindung vorgesehen, dass die Adaption des Kennfeldes eine Überlagerung einer dynamischen Kennfeldadaption "Schwingungskoeffizient" und einer trägen Kennfeldadaption "Abscheideverlust" umfasst.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: einen nur teilweise dargestellten Mähdrescher mit Erntevorsatz
- Figur 2: eine Detailansicht des Mähdreschers und des Erntevorsatzes nach Figur 1
- Figur 3: eine schematische Darstellung der erfindungsgemäßen Kennfeldsteuerung
- Figur 4: eine Detaildarstellung der erfindungsgemäßen Kennfeldadaption
- Figur 4a: Detailerläuterungen zu Figur 4
- Figur 5: eine schematische Darstellung der Arbeitsweise des erfindungsgemäßen Fahrerassistenzsystems
- Figur 6: eine Anwendung der Kennfeldadaption auf spezielle Kennfelder

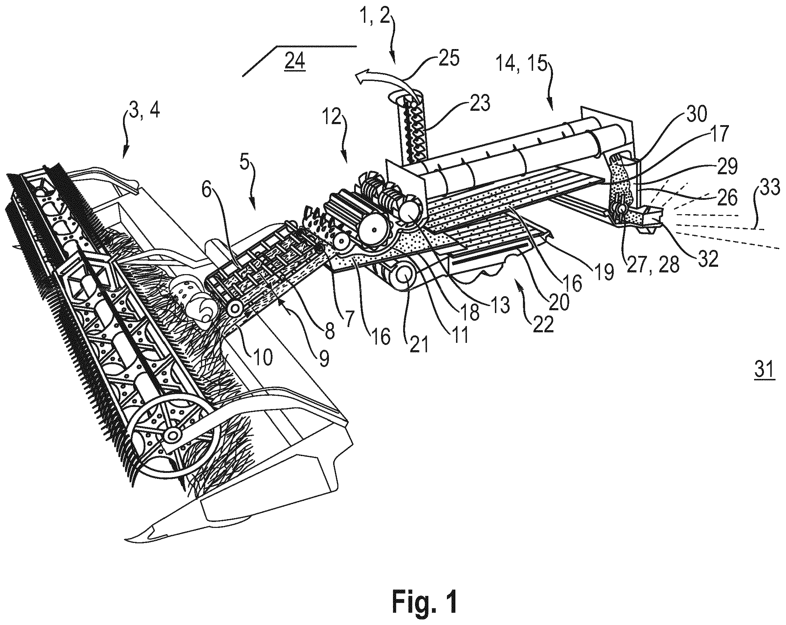

Die in Fig. 1 schematisch dargestellte, als Mähdrescher 2 ausgeführte landwirtschaftliche Arbeitsmaschine 1 nimmt in ihrem frontseitigen Bereich einen beispielhaft als Bandschneidwerk 4 ausgeführten Erntevorsatz 3 auf, welcher in an sich bekannter Weise mit dem Schrägförderer 5 des Mähdreschers 2 verbunden ist. Die Förderorgane 6 des Schrägförderers 5 werden obenseitig um eine Schwenkachse 7 quer zur Längsrichtung des Mähdreschers 2 schwenkbeweglich geführt. Im dargestellten Ausführungsbeispiel sind den Förderorganen 6 in einem mittigen Bereich eine sogenannte an sich bekannte, später aber noch näher erläuterte Schichthöhenwalze 8 zugeordnet, deren Auslenkung in vertikaler Richtung ein Maß für die Schichthöhe 9 des den Schrägförderer 5 durchlaufenden Erntegutstroms 10 ist. Der den Schrägförderer 5 durchlaufende Erntegutstrom 10 wird in dem obenseitigen, rückwärtigen Bereich des Schrägförderers 5 an die untenseitig zumindest teilweise von einem sogenannten Dreschkorb 11 ummantelten Dreschorgane 12 des Mähdreschers 2 übergeben. Eine den Dreschorganen 12 nachgeordnete Umlenktrommel 13 lenkt den im rückwärtigen Bereich der Dreschorgane 12 aus diesen austretenden Gutstrom 10 so um, dass er unmittelbar an eine als Abscheiderotoranordnung 14 ausgeführte Trenneinrichtung 15 übergeben wird. Es liegt im Rahmen der Erfindung, dass die Trenneinrichtung 15 auch als an sich bekannter und deshalb nicht dargestellter Hordenschüttler ausgeführt sein kann. Auch liegt es im Rahmen der Erfindung, dass die Trenneinrichtung nur einrotorig ausgeführt ist oder die Dreschorgane 12 und die Trenneinrichtung 15 zu einer ein- oder zweirotorigen Axialflussdresch- und Trenneirichtung zusammengefasst sind.

In der Trenneinrichtung 15 wird der Gutstrom 10 so gefördert, dass in dem Gutstrom 10 enthaltene freibewegliche Körner 16 im untenseitigen Bereich der Trenneinrichtung 15 abgeschieden werden. Sowohl die am Dreschkorb 11 als auch in der Trenneinrichtung 15 abgeschiedenen Körner 16 werden über Rücklaufboden 17 und Zuführboden 18 einer aus mehreren Siebebenen 19, 20 und einem Gebläse 21 bestehenden Reinigungseinrichtung 22 zugeführt. Der gereinigte Körnerstrom 25 wird schließlich mittels Elevatoren 23 an einen Korntank 24 übergeben.

Im rückwärtigen Bereich der Trenneinrichtung 15 ist dieser eine von einem trichterförmigen Gehäuse 26 ummantelte, als Strohhäcksler 27 ausgeführte Zerkleinerungseinrichtung 28 zugeordnet. Dem Strohhäcksler 27 wird obenseitig das die Trenneinrichtung 15 im rückwärtigen Bereich verlassende Stroh 30 zugeführt. Mittels einer verschwenkbaren Strohleitklappe 29 kann das Stroh 30 auch so umgelenkt werden, dass es direkt auf dem Boden 31 in einem Schwad abgelegt wird.

Im Austrittsbereich des Strohhäckslers 27 wird der aus dem zerkleinerten Stroh 30 bestehende Gutstrom und die in der Reinigungseinrichtung 22 abgeschiedenen Nichtkornbestandteile an eine Gutverteileinrichtung 32 übergeben, welche den Restmaterialstrom 33 so abgibt, dass es zu einer Breitverteilung des Restmaterialstroms 33 auf dem Boden 31 kommt.

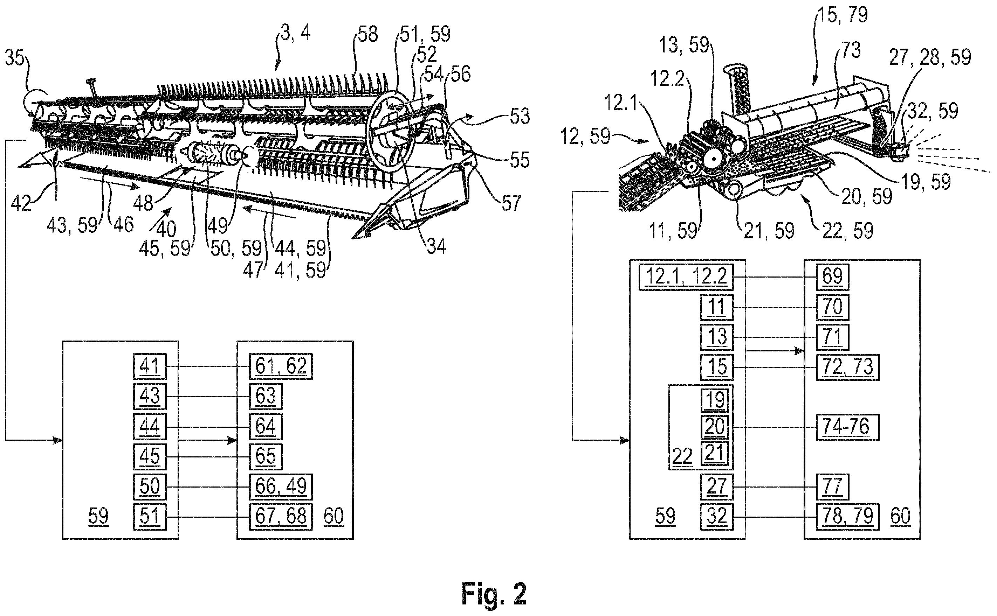

Figur 2 zeigt Details des beispielhaft als Bandschneidwerk 4 ausgeführten Erntevorsatzes 3 und der als Mähdrescher 2 ausgeführten landwirtschaftlichen Arbeitsmaschine 1, die zur näheren Erläuterung der nachfolgend beschriebenen Erfindung erforderlich sind. Im Erntegut-eingangsseitigen Bereich 40 nimmt das Bandschneidwerk 4 einen entweder starr oder flexibel ausgeführten Messerbalken 41 auf, der den zu erntenden Pflanzenbestand 42 abtrennt. Ein flexibel ausgeführter Messerbalken 41 kann dabei in bekannter Weise Bodenkonturänderungen in Längs- und Querrichtung besser folgen. Dem Messerbalken 41 sind im dargestellten Ausführungsbeispiel in Pfeilrichtung 40 gesehen ein linksseitiges Querförderband 43, ein rechtsseitiges Querförderband 44 und ein Mittenband 45 zugeordnet. Das linksseitige Querförderband 43 fördert den von ihm erfassten abgeernteten Pflanzenbestand 42 gemäß Pfeilrichtung 46 in Richtung des Mittenbandes 45 und übergibt ihn an dieses. In analoger Weise fördert das rechtsseitige Querförderband 44 den von ihm erfassten abgeernteten Pflanzenbestand 42 gemäß Pfeilrichtung 47 ebenfalls in Richtung des Mittenbandes 45 und übergibt ihn an dieses. Das Mittenband 45 fördert sodann den von ihm erfassten und von den Querförderbändern 43, 44 an das Mittenband 45 übergebenen Pflanzbestand 42 in den rückwärtigen Bereich des Bandschneidwerks 4 gemäß Pfeilrichtung 48. In diesem rückwärtigen Bereich wird der Pflanzenbestand 42 von einer diesem Bereich zugeordneten gemäß Pfeilrichtung 49 rotierenden Einzugswalze 50 erfasst und als der bereits erwähnte Erntegutstrom 10 an den Schrägförderer 5 übergeben. Obenseitig nimmt das Bandschneidwerk 4 eine ein- oder mehrteilig ausgeführte Haspel 51 auf. Die Position der Haspel 51 kann in an sich bekannter Weise horizontal gemäß Pfeilrichtung 52 und vertikal gemäß Pfeilrichtung 53 angepasst werden, im einfachsten Fall sind für die Umsetzung dieser Bewegungen 52, 53 Hubzylinder 54, 55 am Haspeltragarm 56 und am Rahmen 57 des Bandschneidwerks 4 positioniert. Die Hubzylinder 54, 55 sind jeweils an beiden Seiten des Bandschneidwerks 4 angeordnet. Zudem ist die Position der Mitnahmezinken 58 der Haspel 51 in an sich bekannter und daher nicht näher erläuterten Weise einstellbar. Zudem ist der Haspel 51 zumindest einseitig ein Haspelantriebsmotor 34 zugeordnet, der die Haspel 51 gemäß Pfeilrichtung 35 in eine Drehbewegung versetzt. Der Messerbalken 41, das linksseitige und das rechtseitige Querförderband 43, 44, das Mittenband 45, die Einzugswalze 50 und die Haspel 51 bilden die jeweiligen Prozessaggregate 59 des Bandschneidwerks 4. Ist der Erntevorsatz 3 nicht als Bandschneidwerk 4 ausgeführt können die Prozessaggregate 59 auch beliebige sonstige Baugruppen eines Erntevorsatzes 3, wie etwa die Baugruppen eines konventionellen Getreideschneidwerks oder dergleichen sein. Jedem dieser Prozessaggregate 59 sind Arbeitsparameter 60 zugeordnet, wobei der Arbeitsparameter des Messerbalkens 41 die Schnittgeschwindigkeit 61 und/oder der Messerhub 62, der Arbeitsparameter des linksseitigen Querförderbandes 43, des rechtsseitigen Querförderbandes 44 sowie des Mittenbandes 45 die jeweilige Bandgeschwindigkeit 63 - 65, der Arbeitsparameter der Einzugswalze 50 die Einzugswalzenhorizontalposition 66 und/oder die Einzugswalzendrehzahl 49 und der Arbeitsparameter der Haspel 51 die Haspelvertikalposition 67 und/oder die Haspelhorizontalposition 68 ist.

Die Prozessaggregate 59 der als Mähdrescher 2 ausgeführten landwirtschaftlichen Arbeitsmaschine 1 sind in der rechten Abbildung in Figur 2 gezeigt. Die Prozessaggregate 59 des Mähdreschers 2 können unter anderem die Dreschorgane 12, den Dreschkorb 11, die Umlenktrommel 13, die Trenneinrichtung 15, die Reinigungseinrichtung 22 und hier speziell die der Reinigungseinrichtung 22 zugeordneten Siebebenen 19, 20 und das Gebläse 21, die Zerkleinerungseinrichtung 28, hier der Strohhäcksler 27 und die Gutverteileinrichtung 32 umfassen. Weiter können die Arbeitsparameter 60 dieser Prozessaggregate vorzugsweise die Folgenden sein:
Die Dreschorgane 12 können von einer Vielzahl von Dreschtrommeln 12.1, 12.2 gebildet werden und der Arbeitsparameter 60 bildet die jeweilige Dreschtrommeldrehzahl 69. Der Arbeitsparameter des Dreschkorbes 11 kann beispielsweise dessen sogenannte Dreschspaltweite 70 sein. Der Arbeitsparameter der den Dreschorganen 12 zugeordneten Umlenktrommel 13 kann deren Drehzahl 71 sein. Je nach konkreter Ausführung der Trenneinrichtung 15 können deren Arbeitsparameter 60 ganz unterschiedlich beschaffen sein. Aus dem Stand der Technik sind hier etwa die jeweilige Rotordrehzahl 72 oder die hier nicht dargestellten Öffnungsweiten 73 des Abscheidemantels der Trenneinrichtung 15 bekannt. Die Arbeitsparameter der Reinigungseinrichtung 22 können die Schwingfrequenz- und Schwingungsrichtung 74, 75 der Siebebenen 19, 20 und die Drehzahl 76 des Gebläses 21 umfassen. Der Arbeitsparameter 60 des Strohhäckslers 27 kann beispielsweise auf die Drehzahl 77 der hier nicht näher dargestellten Häckslerwelle beschränkt sein. Die Arbeitsparameter 60 der Gutverteileinrichtung 32 können in an sich bekannter und daher hier nicht näher beschriebenen Weise die Drehzahl 78 der nicht näher dargestellten Auswurforgane und der Abgabepunkt 79 des Restmaterialstroms 33 aus der Gutverteileinrichtung 32 sein.

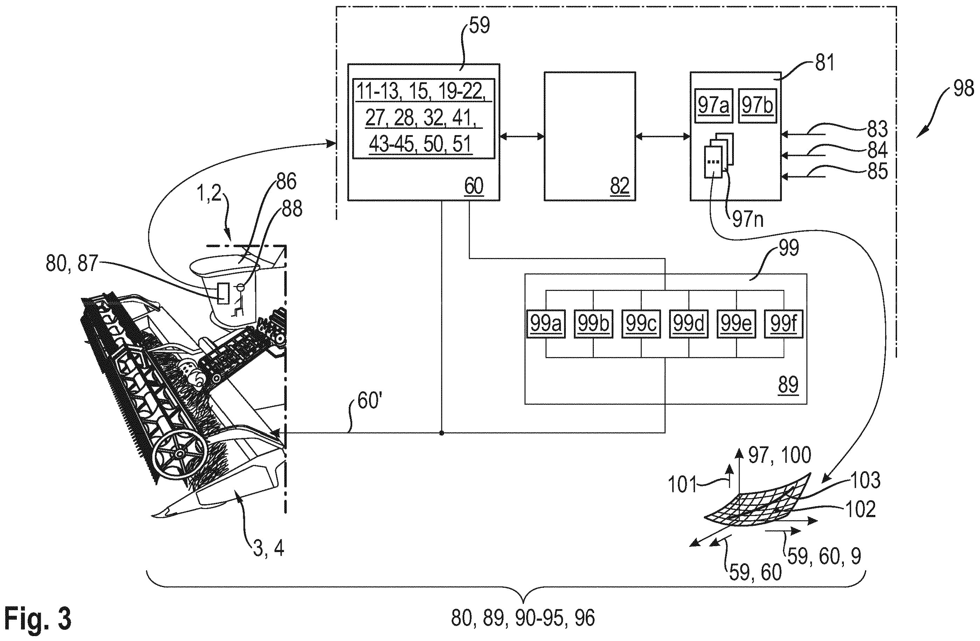

Gemäß Figur 3 weist die landwirtschaftliche Arbeitsmaschine 1 ein Fahrerassistenzsystem 80 zur Ansteuerung des Erntevorsatzes 3 und des Mähdreschers 2 auf. Das Fahrerassistenzsystem 80 umfasst einen Speicher 81 zum Hinterlegen von noch näher zu erläuternden Daten und eine Rechenvorrichtung 82 zur Verarbeitung der in dem Speicher 81 hinterlegten Daten. Die in dem Speicher 81 hinterlegten Daten können zunächst von maschineninternen Sensorsystemen generierte Informationen 83, von extern Systemen generierte Information 84 und unmittelbar in der Rechenvorrichtung 82 hinterlegte Informationen 85 umfassen. Das Fahrerassistenzsystem 80 kann über eine in der Kabine 86 des Mähdreschers 2 angeordneten Bedien- und Anzeigeneinheit 87 betrieben werden. Grundsätzlich ist das Fahrerassistenzsystem 80 dazu eingerichtet, einen Fahrer 88 des Mähdreschers 2 bei der Bedienung des Mähdreschers 2 zu unterstützen.

Wesentlich ist nun, dass zum einen der beispielhaft als Bandschneidwerk 4 ausgeführte Erntevorsatz 3 zusammen mit dem Fahrerassistenzsystem 80 einen Bandschneidwerkautomaten 89 bildet. Zugleich sind die Prozessaggregate 59 der als Mähdrescher 2 ausgeführten landwirtschaftlichen Arbeitsmaschine 1, hier die Dreschorgane 12 einschließlich des Dreschkorbs 11 und der Umlenktrommel 13 in einem Dreschautomaten 90, die Trenneinrichtung 15 in einem Abscheideautomat 91, die Reinigungseinrichtung 22 und hier die der Reinigungseinrichtung 22 zugeordneten Siebebenen 19, 20 und das Gebläse 21 in einem Reinigungsautomat 92, die Zerkleinerungseinrichtung 28, hier der Strohhäcksler 27, in einem Häckselautomat 93 und die Gutverteileinrichtung 32 in einem Verteilautomat 94 zusammengefasst. Zudem kann anstelle des sehr spezialisierten Bandschneidwerkautomat 89 auch ein allgemeiner Vorsatzgeräteautomat 95 vorgesehen sein. Alle hier aufgezählten Automaten 89 - 95 werden nachfolgend aus Vereinfachungsgründen gemeinschaftlich als Prozessaggregatautomat 96 bezeichnet.

Vorschlagsgemäß werden die Prozessaggregatautomaten 96 dadurch realisiert, dass in dem Speicher 81 des Fahrerassistenzsystems 80 noch detailliert zu beschreibende Kennfelder 97 hinterlegt sind und die Rechenvorrichtung 82 dazu eingerichtet ist mittels der hinterlegten Kennfelder 97 den jeweiligen Prozessaggregatautomat 96 als Kennfeldsteuerung 98 zu betreiben und der jeweilige Prozessaggregatautomat 96 eingerichtet ist, Arbeitsparameter 60 der Prozessaggregate 59 zu optimieren und die optimierten Arbeitsparameter 60' dem jeweiligen Prozessaggregat 59 vorzugeben. Auf diese Weise ist der jeweilige Prozessaggregatautomat 96 eingerichtet, die Arbeitsparameter 60 eines oder mehrerer der beschriebenen Prozessaggregate 59 zu optimieren und die optimierten Arbeitsparameter 60' dem jeweiligen Prozessaggregat 11-13, 15, 19-22, 27,28, 32, 41, 43-45, 50, 51, vorzugeben.

Zudem kann der jeweilige Prozessaggregatautomat 96 so eingerichtet sein, dass er prozessaggregat-spezifische Teilautomaten 99 in der Weise ausbildet, dass jeder Teilautomat 99 eine Auswahl von Prozessaggregaten 59 optimiert. Beispielsweise kann der Bandschneidwerkautomat 89 einen oder mehrere Querförderbandautomaten 99a, b, einen Mittenbandautomat 99c, einen Haspelautomat 99d, einen Messerbalkenautomat 99e und/oder einen Einzugswalzenautomat 99f ausbilden und die jeweiligen Teilautomaten 99a..f eingerichtet sind die Arbeitsparameter 59 der Querförderbänder 43, 44, des Mittenbandes 45, der Haspel 51, des Messerbalkens 41 und/oder der Einzugswalze 50 des Bandschneidwerks 4 zu optimieren und die optimierten Arbeitsparameter 60' dem jeweiligen Prozessaggregat 59 des Bandschneidwerks 4 vorzugeben. In Analogie hierzu können auch jedem Teilautomaten 99a...f ein oder mehrere Kennfelder 97 zugeordnet sein.

Erfindungsgemäß ist das jeweilige Kennfeld 97 als Initialkennfeld 100 ausgeführt, wobei in dem Initialkennfeld 100 zumindest der Zusammenhang von Arbeitsparametern 60 eines Prozessaggregats 59 und Qualitätsparametern 101 durch Initialarbeitspunkte 102 beschrieben wird und dem jeweiligen Kennfeld 97 eine Steuerkennlinie 103 zugeordnet ist und die Steuerkennlinie 103 im Bereich eines Minimums oder Maximums des jeweiligen Qualitätsparameters 101 liegt. Die Steuerkennlinien 103 liegt dann im Bereich eines Minimums des jeweiligen Qualitätsparameters 101, wenn dieser ein negatives Arbeitsergebnis der landwirtschaftlichen Arbeitsmaschine 1, wie etwa einen Kornverlust, beschreibt. Demgegenüber liegt die Steuerkennlinien 103 dann im Bereich eines Maximums des jeweiligen Qualitätsparameters 101, wenn dieser ein positives Arbeitsergebnis der landwirtschaftlichen Arbeitsmaschine 1, wie etwa einen Kornreinheitsgrad, beschreibt. In einer Startkonfiguration kann das Initialkennfeld 100 im Fahrerassistenzsystem 80 der landwirtschaftlichen Arbeitsmaschine 1 hinterlegt sein oder vor einem Arbeitsbetrieb an dieses übergeben werden, wobei das Initialkennfeld 100 im Arbeitsbetrieb zyklisch aktualisiert und als neues Initialkennfeld 100 gespeichert wird. Das dem jeweiligen Prozessaggregatautomaten 96 zugeordnete Kennfeld 97 kann zudem einen den Erntegutdurchsatz repräsentierenden Parameter, vorzugsweise die Schichthöhe 9, berücksichtigen.

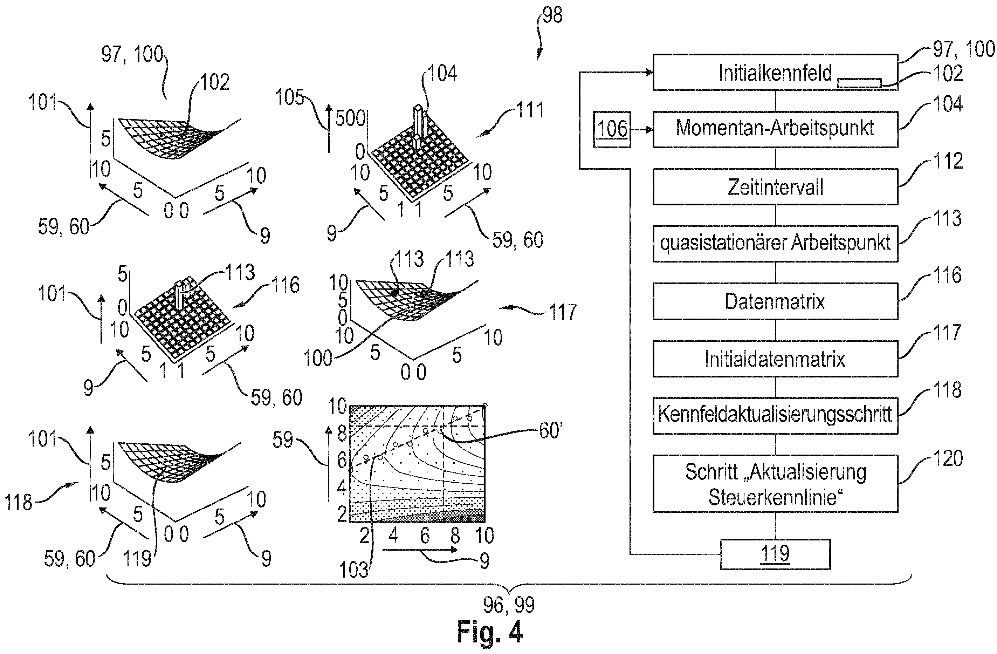

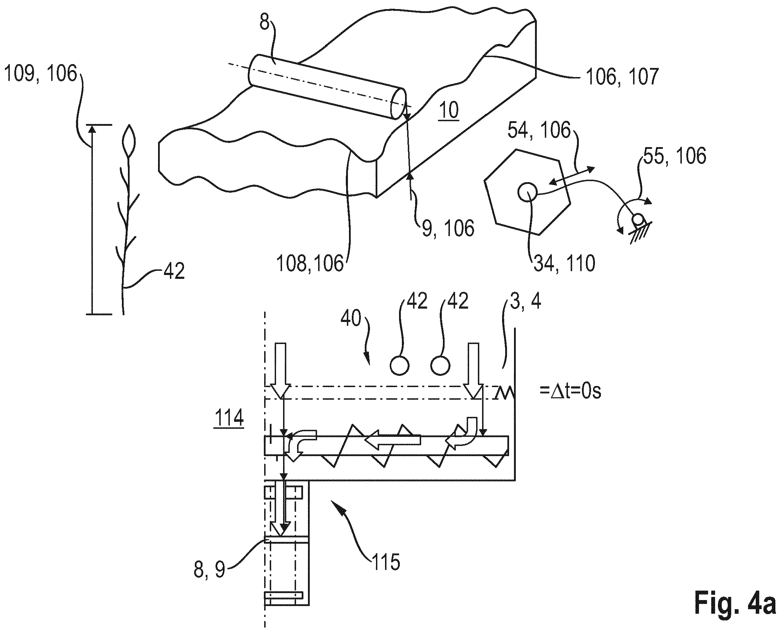

Das erfindungsgemäße Prinzip der Kennfeldgenerierung und Kennfeldsteuerung 98 wird in Figur 4 detailliert beschrieben. Das Kennfeld 97 ist in dem jeweiligen Prozessaggregatautomat 96 und/oder den Teilautomaten 99 als Initialkennfeld 100 hinterlegt, wobei in dem Initialkennfeld 100 der beschriebene Zusammenhang von Arbeitsparametern 60 des jeweiligen Prozessaggregats 59, Qualitätsparametern 101 und dem erntegutdurchsatz-bezogenen Parameter Schichthöhe 9 durch Initialarbeitspunkte 102 abgebildet wird. Im Erntebetrieb des Mähdreschers 2 werden Momentan-Arbeitspunkte 104 für die Schichthöhe 9 und die Arbeitsparameter 60 in Abhängigkeit von der Zeit 105 ermittelt.

Zur Ermittlung der Momentan-Arbeitspunkte 104 werden Messgrößen 106 herangezogen, die gemäß Figur 4a vorzugsweise eine Längsschwingung 107 und/oder eine Querschwingung 108 eines die landwirtschaftliche Erntemaschine 1 durchlaufenden Erntegutstromes 10 und/oder eine Bestandshöhe 109 des Pflanzenbestandes 42 und/oder ein Hydraulikdruck 110 oder Leistungsbedarf eines Haspelantriebsmotors 34 sein können. Die Messgröße Längsschwingung 107 entspricht dabei der bereits beschriebenen, mittels Schichthöhenwalze 8 ermittelten Schichthöhe 9 in Abhängigkeit von der Zeit.

Mithin sind die Messgrößen 106 so beschaffen, dass aus ihnen die Qualitätsparameter 101 sowie die durchsatzproportionale Schichthöhe 9 abgeleitet werden können.

Die ermittelten Momentan-Arbeitspunkte 104 werden in einer Datenmatrix 111 zwischengespeichert, wobei die Änderung des Wertes des jeweiligen Momentan-Arbeitspunktes 104 innerhalb eines Zeitintervalls 112 ermittelt wird und der Momentan-Arbeitspunkt 104 dann in einen quasistationären Arbeitspunkt 113 überführt wird, wenn sein Wert annährend unverändert, vorzugsweise konstant bleibt. Ein bevorzugtes Zeitintervall 112 kann hier bei sechs Sekunden liegen. Das Zeitintervall 112 soll vorzugsweise zumindest so lang sein, dass es ein Totzeitintervall 114 in der Messkette 115 kompensiert. Beispielsweise erreicht der in dem ernteguteingangsseitigen Bereich 40 in den als Bandschneidwerk 4 ausgeführten Erntevorsatz 3 eintretende Pflanzenbestand 42 die beschriebene Schichthöhenwalze 8 erst nach einer bestimmten Zeit. Dieser zeitliche Versatz zwischen Guteintritt und Messung der Schichthöhe 9, der maßgeblich von der Arbeitsbreite des Bandschneidwerks 4 und der Gutfördergeschwindigkeit abhängt, wird in dem besagten Totzeitintervall 114 berücksichtigt (siehe Figur 4a).

Die ermittelten quasistationären Arbeitspunkte 113 werden sodann in einer Datenmatrix 116 gesammelt. Sind in der Datenmatrix 116 eine bestimmte Anzahl quasistationärer Arbeitspunkte 113 gesammelt, vorzugsweise vier quasistationäre Arbeitspunkte 113, werden in dieser Datenmatrix 116 für die gesammelten quasistationären Arbeitspunkte 113 in Analogie zum jeweiligen Initialkennfeld 100 die Abhängigkeiten zwischen Qualitätsparameter 101, durchsatzproportionaler Schichthöhe 9 und dem Arbeitsparameter 60 des jeweiligen Prozessaggregats 59 ermittelt. Die quasistationären Arbeitspunkte 113 werden in einem nächsten Schritt in eine Initialdatenmatrix 117 übernommen, die dem Initialkennfeld 100 mit übernommenen quasistationären Arbeitspunkten 113 entspricht. Sodann wird in einem Kennfeldaktualisierungsschritt 118 das aktualisierte Kennfeld 119 berechnet, welches das Initialkennfeld 100 ersetzt. Damit auch das aktualisierte Kennfeld 119 die beschriebene Kennfeldsteuerung 98 ermöglicht, in deren Ergebnis der jeweilige Prozessaggregatautomat 96 und/oder die Teilautomaten 99 optimierte Arbeitsparameter 60' generieren, wird für jedes aktualisierte Kennfeld 119 in einem Schritt "Aktualisierung Steuerkennlinie" 120 die Steuerkennlinie 103 neu berechnet, die sich in dem jeweils aktualisierten Kennfeld 119 entlang des Minimums oder Maximums des jeweiligen Qualitätsparameters 101 erstreckt und den jeweils optimalen Arbeitsparameters 60' beschreibt.

Das jeweils aktualisierte Kennfeld 119 bildet in dem jeweiligen Prozessaggregatautomaten 96 und/oder dem jeweiligen Teilautomaten 99 sodann wieder das jeweilige Initialkennfeld 100 für einen folgenden Kennfeldanpassungsprozess.

Erfindungsgemäß werden auf diese Weise im Arbeitsbetrieb in Abhängigkeit von den beschriebenen Messgrößen 106 Momentan-Arbeitspunkte 104 ermittelt, die in quasistationäre Arbeitspunkte 113 umgerechnet werden und die ermittelten quasistationären Arbeitspunkte 113 die korrespondierenden Arbeitspunkte 102 des jeweiligen Kennfeldes 97 überschreiben, wobei das Initialkennfeld 100 in ein aktualisiertes Kennfeld 119 gewandelt und eine aktualisierte Steuerkennlinie 103 des aktualisierten Kennfeldes 119 ermittelt wird.

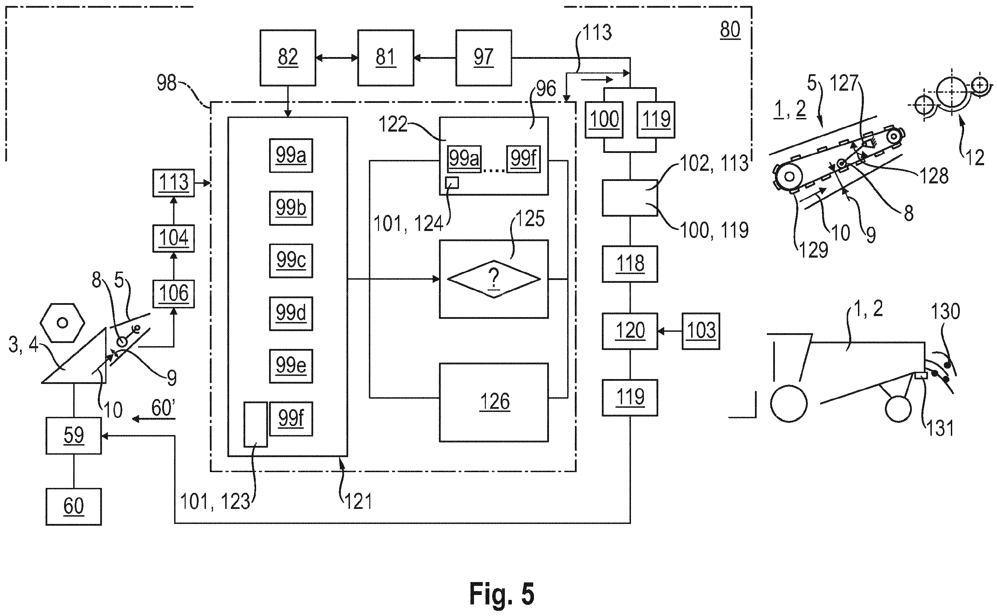

Figur 5 beschreibt schließlich das erfindungsgemäße Fahrerassistenzsystem 80 im Zusammenhang. Gemäß den vorhergehenden Ausführungen bilden das oder die Prozessaggregate 59 zusammen mit dem Fahrerassistenzsystem 80 einen Prozessaggregatautomaten 96, der zugleich Teilautomaten 99a..f umfassen kann.

Indem im Speicher 81 des Fahrerassistenzsystems 80 Kennfelder 97 hinterlegt sind und die Rechenvorrichtung 82 dazu eingerichtet ist mittels der hinterlegten Kennfelder 97 den Prozessaggregatautomat 96 und/oder die Teilautomaten 99a..f als Kennfeldsteuerung 98 zu betreiben, sind der Prozessaggregatautomat 96 und/oder die Teilautomaten 99a..f in der Lage, Arbeitsparameter 60 der Prozessaggregate 59 des Erntevorsatzes 3 und der als Mähdrescher 2 ausgeführten landwirtschaftliche Arbeitsmaschine 1 zu optimieren und die optimierten Arbeitsparameter 60' den jeweiligen Prozessaggregaten 59 vorzugeben. Hierfür ermittelt das Fahrerassistenzsystem 80 in einem ersten Schritt die beschriebenen Messgrößen 106 des Erntevorsatzes 3 und der landwirtschaftlichen Erntemaschine 1. Zumindest aus den ermittelten Messgrößen 106 generierte das erfindungsgemäße Fahrerassistenzsystem 80 sodann die Momentan-Arbeitspunkte 104 des Prozessaggregatautomaten 96 und/oder der Teilautomaten 99a..f. In einem nächsten Datenverarbeitungsschritt rechnet das Fahrerassistenzsystem 80 die Momentan-Arbeitspunkte 104 in der zuvor beschriebenen Weise in quasistationäre Arbeitspunkte 113 um und übergibt diese quasistationären Arbeitspunkte 113 sodann an den Prozessaggregatautomat 96 und/oder die Teilautomaten 99a..f. Die von dem Prozessaggregatautomat 96 und/oder den Teilautomaten 99a..f realisierte Kennfeldsteuerung 98 ist so beschaffen, dass die quasistationären Arbeitspunkte 113 an das jeweils hinterlegte bereits beschriebene Initialkennfeld 100 oder das bereits aktualisierte Kennfeld 119 übergeben werden. In dem jeweiligen Kennfeld 100, 119 wird sodann der dort hinterlegte Initialarbeitspunkt 102 durch den quasistationären Arbeitspunkt 113 ersetzt. Dabei wird, wie beschrieben, zunächst eine Anzahl quasistationärer Arbeitspunkte 113 in das jeweilige Kennfeld 100, 119 übernommen, wobei jeder dieser quasistationären Arbeitspunkte 113 einen Initialarbeitspunkt 102 ersetzt. Sodann wird ein Kennfeldaktualisierungsschritt 118 gestartet, der dazu führt, dass das jeweilige Kennfeld 100, 119 auf Basis der ermittelten quasistationären Arbeitspunkte 113 neu berechnet wird. In dem darauffolgenden Verfahrensschritt "Aktualisierung Steuerkennlinie" 120 wird eine neue Steuerkennlinie 103 des jeweiligen Kennfeldes 100, 119 ermittelt und letztlich bildet das auf diese Weise neu ermittelte Kennfeld 100, 119 und zugehörige Steuerkennlinie 103 das jeweils aktualisierte Kennfeld 119. Das Fahrerassistenzsystem 80 ermittelt sodann anhand des aktualisierten Kennfeldes 119 die jeweiligen, bereits beschriebenen optimierten Arbeitsparameter 60' und gibt diese dem jeweiligen Prozessaggregat 59 vor.

Die Kennfeldsteuerung 80 des Prozessaggregatautomaten 96 und/oder der Teilautomaten 99a..f ist zudem so beschaffen, dass sie eine schnelle, eine dynamische Kennfeldadaption 121 und eine träge Kennfeldadaption 122 zulässt. Eine dynamische Kennfeldadaption 121 wird dann erreicht, wenn der Qualitätsparameter 101 des jeweiligen Kennfeldes 97 von einem noch näher zu beschreibenden Schwingungskoeffizient 123 gebildet wird. Der aus dem Stand der Technik bekannte Schwingungskoeffizient 123 wird detailliert in EP 3 858 129 A1 beschrieben, deren Offenbarungsgehalt hier durch Bezugnahme vollumfänglich Bestandteil dieser Patentanmeldung wird. Gemäß der Offenbarung der EP 3 858 129 A1 beschreibt der Schwingungskoeffizient 123 eine Schwankung des den Mähdrescher 2 durchlaufenden Erntegutdurchsatzes. Hierfür wird die Schichthöhe 9 des den Mähdrescher 2 im Bereich des Schrägförderers 5 durchlaufenden Erntegutstroms 10 in Abhängigkeit von der Zeit aufgezeichnet. Die ermittelte Schichthöhenschwankung wird sodann gemäß dem in EP 3 858 129 offenbarten Verfahren in den erfindungsgemäßen Schwingungskoeffizienten 123 umgerechnet. Die Schichthöhe 9 wird in einem vor den Dreschorganen 12 liegenden Bereich ermittelt, da der Gutstrom 10 im Bereich der Dreschorgane 12 derart intensiv bearbeitet wird, dass Schichthöhenschwankungen im Erntegutstrom 10 nach Verlassen der Dreschorgane 12 keinen hinreichenden Bezug mehr zum Erntegutdurchsatz haben. Die Schichthöhe 9 wird mittels der bereits erwähnten Schichthöhenwalze 8 im Bereich des Schrägförderers 5 ermittelt, wobei die Schichthöhenwalze 8 um eine Schwenkachse 127 schwenkbeweglich geführt wird und die Auslenkung 128 der Schichthöhenwalze 8 als Maß für die Ermittlung der Schichthöhe 9 herangezogen wird. In an sich bekannter Weise ist die Schichthöhenwalze 8 so oberhalb der die Gutmitnahme bewirkenden Schrägförderleisten 129 positioniert, das deren schichthöhenabhängige Bewegung auf die Schichthöhenwalze 8 übertragen wird und die Auslenkung 128 der Schichthöhenwalze 8 bewirkt.

Der Qualitätsparameter Schwingungskoeffizient 123 lässt deshalb eine schnelle, dynamische Kennfeldsteuerung 121 zu, da dieser Qualitätsparameter 101 von der im Schrägförderer 5 positionierten Schichthöhenwalze 8 detektierten Schichthöhe 9 abhängt und unmittelbar nach Eintritt des Erntegutstromes 10 in die landwirtschaftliche Arbeitsmaschine 1 bestimmt wird.

Demgegenüber stellt sich die träge Kennfeldadaption 122 dadurch ein, dass der Qualitätsparameter 101 des jeweiligen Kennfeldes 97 von einem Abscheideverlust 124 gebildet wird und dieser erst gemessen wird, wenn der Restmaterialstrom 33 und die in ihm enthaltenen Verlustkörner die landwirtschaftliche Arbeitsmaschine 1 in deren rückwärtigen Bereich verlassen. Der Abscheideverlust 124 beschreibt den Kornverlust 130, nämlich die aus dem Mähdrescher 2 in dessen rückwärtigen Bereich austretenden Verlustkörner. In der Regel wird der Kornverlust 130 im rückwärtigen Bereich des Mähdreschers 2 in an sich bekannter Weise mittels geeigneter und hinlänglich bekannter Kornverlustsensoren 131, in der Regel sogenannte Klopfsensoren, ermittelt.

Obgleich zu einem späten Zeitpunkt generiert hat die träge Kennfeldadaption 122 den Vorteil, dass sie einen Parameter, hier den Abscheideverlust 124 detektiert, der maßgeblich die Arbeitsqualität der landwirtschaftlichen Arbeitsmaschine 1 bestimmt und hohe Abscheideverluste 124 immer auch ein Indikator für einen nicht optimalen Gutfluss in der landwirtschaftlichen Arbeitsmaschine 1 sind, wobei einem nicht optimalen Gutfluss in der landwirtschaftlichen Arbeitsmaschine 1 insbesondere dadurch entgegengewirkt werden kann, wenn der Erntevorsatz 3 einen homogenen Erntegutstrom 10 erzeugt, der dann kontinuierlich an die landwirtschaftliche Arbeitsmaschine 1 übergeben wird.

Zudem kann das Fahrerassistenzsystem 80 so beschaffen sein, dass die Kennfeldsteuerung 98 einen Prüfschritt 125 umfasst, in welchem geprüft wird, ob sich für die zu optimierenden Arbeitsparameter 60 bei Anwendung der dynamischen Kennfeldadaption 121 und der trägen Kennfeldadaption 122 gegenläufige Tendenzen für den Wert des jeweils optimierten Arbeitsparameters 60' einstellen. Ist dies der Fall ist in einer vorteilhaften Ausgestaltung der Erfindung vorgesehen, dass anhand von Randbedingungen entschieden wird, welcher Arbeitspunkt, der sich aus der Steuerkennlinie 103 ergibt angefahren wird. Die erwähnten Randbedingungen werden in einer vorteilhaften Ausgestaltung in einer Kostenfunktion hinterlegt, welche in einer vorteilhaften Ausgestaltung die Parameter Durchsatz/h, Schwingungskoeffizient 123, Abscheideverlust 124, Schneidwerksverlust umfassen, wobei diese Parameter unterschiedlich gewichtet sein können.

Weiter ist das Fahrerassistenzsystem 80 so beschaffen, das es bei der Generierung der jeweiligen Kennfelder 97, wobei dies sowohl die Initialkennfelder 100 als auch die aktualisierten Kennfelder 119 sein können, Expertenwissen 126 berücksichtigt.

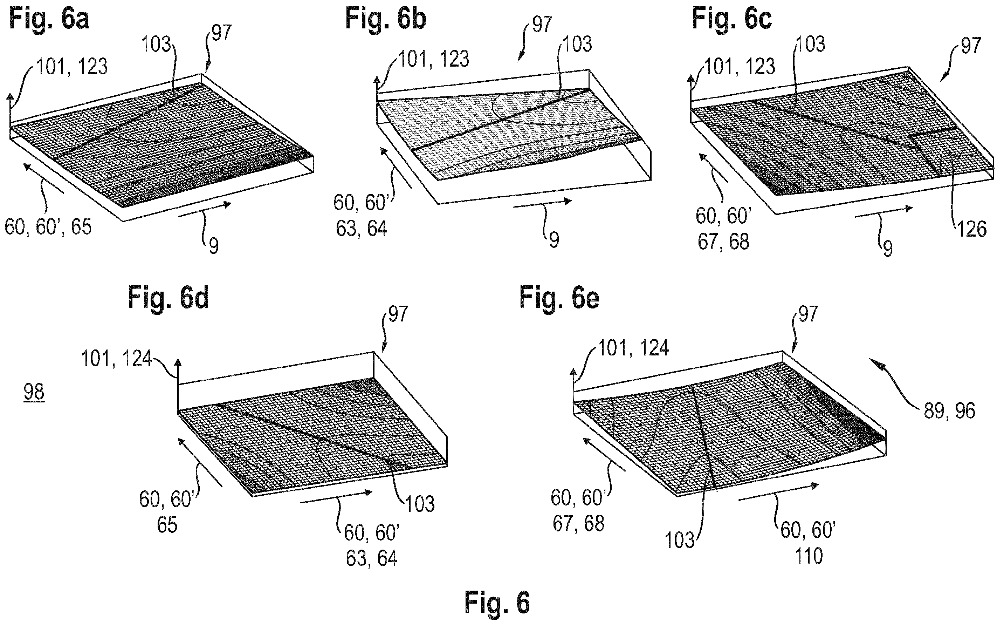

In Figur 6 wird die Anwendung des erfindungsgemäßen Verfahrens zur Adaption von Kennfeldern 97 am Beispiel des Bandschneidwerkautomaten 89 detaillierter beschrieben. In Figur 6 werden die erfindungsgemäßen Kennfelder 97 in Abhängigkeit von verschiedenen Qualitätsparametern 101 beschrieben, wobei hier als Qualitätsparameter 101 der beschriebene Schwingungskoeffizient 123 und der Abscheideverlust 124 herangezogen werden. Es liegt im Rahmen der Erfindung, dass in Abhängigkeit von dem konkreten Prozessaggregatautomaten 96 auch andere, aus dem Stand der Technik bekannte Qualitätsparameter 101 genutzt werden können, um das erfindungsgemäße Verfahren anzuwenden. Beispielhaft sei hier auf die bekannten Qualitätsparameter 101 "Reinigungsverlust", "Zusammensetzung eines Überkehrerntegutstromes", Bruchkornanteil, Abscheideverluste, Nichtkornbestandteile im Bunker, Strohqualität verweisen.

Die in dem Bandschneidwerkautomaten 89 und/oder seinen Teilautomaten 99 hinterlegten Kennfelder 97 können je nachdem welche Art der Optimierung umgesetzt werden soll ganz unterschiedlich strukturiert sein. Gemäß Figur 6, obere Abbildungen, kann das jeweilige Kennfeld 97 den jeweiligen Arbeitsparameter 60 in Abhängigkeit vom Schwingungskoeffizienten 123 und den Erntegutdurchsatz durch die den Erntegutdurchsatz repräsentierende Schichthöhe 9 beschreiben. Gemäß Figur 6, untere Abbildungen, kann das jeweilige Kennfeld 97 den oder die jeweiligen Arbeitsparameter 60 zumindest in Abhängigkeit vom Abscheideverlust 124 beschreiben.

Damit das jeweilige Kennfeld 97 die beschriebene Kennfeldsteuerung 98 ermöglicht, in deren Ergebnis der Bandschneidwerkautomat 89 und/oder die Teilautomaten 99 optimierte Arbeitsparameter 60' generieren, ist jedem Kennfeld 97 eine Steuerkennlinie 103 zugeordnet, die sich in dem jeweiligen Kennfeldes 97 hier entlang des Minimums des jeweiligen Schwingungskoeffizienten 123 oder des Abscheideverlusts 124 erstreckt und den jeweils optimalen Arbeitsparameters 60' beschreibt.

In einer Ausgestaltung nach Figur 6a beschreibt das Kennfeld 97 den Zusammenhang zwischen dem Qualitätsparameter Schwingungskoeffizient 123, dem den Erntegutdurchsatz repräsentierenden Parameter Schichthöhe 9 und dem Arbeitsparameter 60 "Bandgeschwindigkeit Mittenband" 65, wobei die dem Kennfeld 97 zugeordnete Steuerkennlinie 103 im Bereich des Minimums des Schwingungskoeffizienten 123 liegt. Tendenziell kann man erkennen, dass die Kennfeldsteuerung 98 hier so beschaffen ist, dass größere Schichthöhen 9 höhere Bandgeschwindigkeiten 65 benötigen, während zu hohe oder zu niedrige Bandgeschwindigkeiten 65 den Schwingungskoeffizienten 123 und damit einen optimierten Arbeitsparameter 60' tendenziell eher negativ beeinflussen.

In einer Ausgestaltung nach Figur 6b beschreibt das Kennfeld 97 den Zusammenhang zwischen dem Qualitätsparameter Schwingungskoeffizient 123, dem den Erntegutdurchsatz repräsentierenden Parameter Schichthöhe 9 und dem Arbeitsparameter 60 "Bandgeschwindigkeit rechtsseitiges und/oder linksseitiges Querförderband" 63, 64, wobei die dem Kennfeld 97 zugeordnete Steuerkennlinie 103 im Bereich des Minimums des Schwingungskoeffizienten 123 liegt. Tendenziell kann man erkennen, dass die Kennfeldsteuerung 98 hier ähnlich der nach Figur 6a beschaffen ist, wobei die jeweiligen Einflüsse, dass größere Schichthöhen 9 höhere Bandgeschwindigkeiten 63, 64 benötigen, während zu hohe oder zu niedrige Bandgeschwindigkeiten 63, 64 den Schwingungskoeffizienten 123 und damit einen optimierten Arbeitsparameter 60' tendenziell eher negativ beeinflussen, intensiver ausgeprägt sind.

In einer Ausgestaltung nach Figur 6c beschreibt das Kennfeld 97 den Zusammenhang zwischen dem Qualitätsparameter Schwingungskoeffizient 123, dem den Erntegutdurchsatz repräsentierenden Parameter Schichthöhe 9 und dem Arbeitsparameter 60 "Haspelhorizontalposition und/oder Haspelvertikalposition" 67, 68, wobei die dem Kennfeld 97 zugeordnete Steuerkennlinie 103 im Bereich des Minimums des Schwingungskoeffizienten 123 liegt. Man kann erkennen, dass die Kennfeldsteuerung 98 hier keiner ausgeprägten Tendenz folgt, sondern sehr spezifisch von den ins Verhältnis gesetzten Parametern abhängen. Aufgrund dessen, dass eine Positionsänderung 67, 68 der Haspel 51 sehr komplexen Zusammenhängen folgt, erstreckt sich hier die Steuerkennlinie 103 nicht durch alle Bereiche des Kennfeldes 97, sondern in speziellen Randbereichen wird die Steuerkennlinie 103 durch Expertenwissen 126 ersetzt.

In einer Ausgestaltung nach Figur 6d beschreibt das Kennfeld 97 den Zusammenhang zwischen dem Qualitätsparameter Abscheideverlust 124 und den Arbeitsparametern 60 "Bandgeschwindigkeit Mittenband" 65 und "Bandgeschwindigkeit linksseitiges und/oder rechtsseitiges Querförderband" 63, 64, wobei die dem Kennfeld 97 zugeordnete Steuerkennlinie 103 im Bereich des Minimums des Abscheideverlusts 124 liegt. Tendenziell zeigt sich, dass der Einfluss der Bandgeschwindigkeiten 63-65 auf den Abscheideverlust 124 moderat ausfällt und im Wesentlichen alle Bandgeschwindigkeiten 63-65 die gleiche Tendenz aufweisen, nämlich steigt oder sinkt die Bandgeschwindigkeit 63, 64 der linksseitiges und/oder rechtsseitiges Querförderbänder 43, 44 steigt oder sinkt auch die optimierte Bandgeschwindigkeit 65 des Mittenbandes 45 und umgekehrt.

In einer Ausgestaltung nach Figur 6e beschreibt das Kennfeld 97 den Zusammenhang zwischen dem Qualitätsparameter Abscheideverlust 124, dem den Erntegutdurchsatz repräsentierenden Parameter "Hydraulikdruck oder Leistungsbedarf eines Haspelantriebsmotors/ Haspelantriebszylinders" 110 und dem Arbeitsparameter 60 "Haspelhorizontalposition und/oder Haspelvertikalposition" 67, 68, wobei die dem Kennfeld 97 zugeordnete Steuerkennlinie 103 im Bereich des Minimums des Abscheideverlusts 124 liegt. Tendenziell ist erkennbar, dass mit zunehmendem Hydraulikdruck 110, d.h. mit zunehmendem Durchsatz oder einem höher gewachsenen Pflanzenbestand 42, eine größere Haspelhöhe 67, 68 zu niedrigeren Abscheideverlusten 124 führt.

Aufgrund dessen, dass der Abscheideverlust 124 erst ermittelt wird, wenn der entsprechende Erntegutstrom 10 den Mähdrescher 2 vollständig durchlaufen hat und der von der detektierten Schichthöhe 9 abhängige Erntegutdurchsatz bereits unmittelbar nach dem Eintritt des Erntegutstromes 10 in den Mähdrescher 2 ermittelt wird, führte die Anpassung des jeweiligen Kennfeldes 97 in Abhängigkeit vom Schwingungskoeffizienten 123 zu einer schnellen Anpassung des jeweiligen Kennfeldes 97, während die Anpassung des jeweiligen Kennfeldes 97 in Abhängigkeit vom Abscheideverlust 124 eine langsamere Anpassung des jeweiligen Kennfeldes 97 bewirkt.

**Bezugszeichenliste:**

| | | | |
|---|---|---|---|
| 1 | landwirtschaftliche Arbeitsmaschine | 34 | Haspelantriebsmotor |
| 2 | Mähdrescher | 35 | Pfeilrichtung |
| 3 | Erntevorsatz | | |
| 4 | Bandschneidwerk | 40 | ernteguteingangsseitiger Bereich |
| 5 | Schrägförderer | 41 | Messerbalken |
| 6 | Förderorgane | 42 | Pflanzenbestand |
| 7 | Schwenkachse | 43 | linksseitiges Querförderband |
| 8 | Schichthöhenwalze | 44 | rechtsseitiges Querförderband |
| 9 | Schichthöhe | 45 | Mittenband |
| 10 | Erntegutstrom | 46-49 | Pfeilrichtung |
| 11 | Dreschkorb | 50 | Einzugswalze |
| 12 | Dreschorgan | 51 | Haspel |
| 13 | Umlenktrommel | 52-53 | Pfeilrichtung |
| 14 | Abscheiderotoranordnung | 54,55 | Hubzylinder |
| 15 | Trenneinrichtung | 56 | Haspeltragarm |
| 16 | Körner | 57 | Rahmen |
| 17 | Rücklaufboden | 58 | Mitnahmezinken |
| 18 | Zuführboden | 59 | Prozessaggregat |
| 19 | Siebebene | 60 | Arbeitsparameter |
| 20 | Siebebene | 60' | optimierter Arbeitsparameter |
| 21 | Gebläse | 61 | Schnittgeschwindigkeit |
| 22 | Reinigungseinrichtung | 62 | Messerhub |
| 23 | Elevator | 63-65 | Bandgeschwindigkeit |
| 24 | Korntank | 66 | Einzugswalzenhorizontalposition |
| 25 | Körnerstrom | 67 | Haspelvertikalposition |
| 26 | Gehäuse | 68 | Haspelhorizontalposition |
| 27 | Strohhäcksler | 69 | Dreschtrommeldrehzahl |
| 28 | Zerkleinerungseinrichtung | 70 | Dreschspalt |
| 29 | Strohleitklappe | 71 | Umlenktrommeldrehzahl |
| 30 | Stroh | 72 | Rotordrehzahl |
| 31 | Boden | 73 | Öffnungsweite Abscheidemantel |
| 32 | Gutverteileinrichtung | 74 | Schwingfrequenz und -richtung |
| 33 | Restmaterialstrom | 75 | Schwingfrequenz und -richtung |
| 76 | Drehzahl Gebläse | 110 | Hydraulikdruck |
| 77 | Drehzahl Strohhäcksler | 111 | Datenmatrix |
| 78 | Drehzahl Verteileinrichtung | 112 | Zeitintervall |
| 79 | Abgabepunkt Verteileinrichtung | 113 | quasistationärer Arbeitspunkt |
| 80 | Fahrerassistenzsystem | 114 | Totzeitintervall |
| 81 | Speicher | 115 | Messkette |
| 82 | Rechenvorrichtung | 116 | Datenmatrix |
| 83 | interne Informationen | 117 | Initialdatenmatrix |
| 84 | externe Informationen | 118 | Kennfeldaktualisierungsschritt |
| 85 | hinterlegte Informationen | 119 | aktualisiertes Kennfeld |
| 86 | Kabine | 120 | Schritt "Aktualisierung Steuerkennlinie" |
| 87 | Bedien- und Anzeigeeinheit | 121 | dynamische Kennfeldadaption |
| 88 | Fahrer | 122 | träge Kennfeldadaption |
| 89 | Bandschneidwerkautomat | 123 | Schwingungskoeffizient |
| 90 | Dreschautomat | 124 | Abscheideverlust |
| 91 | Abscheideautomat | 125 | Prüfschritt |
| 92 | Reinigungsautomat | 126 | Expertenwissen |
| 93 | Häckselautomat | 127 | Schwenkachse |
| 94 | Verteilautomat | 128 | Auslenkung |
| 95 | Vorsatzgeräteautomat | 129 | Schrägförderleisten |
| 96 | Prozessaggregatautomat | 130 | Kornverlust |
| 97 | Kennfeld | 131 | Kornverlustsensor |
| 98 | Kennfeldsteuerung | | |
| 99 | Teilautomat | | |
| 100 | Initialkennfeld | | |
| 101 | Qualitätsparameter | | |
| 102 | Initialarbeitspunkt | | |
| 103 | Steuerkennlinie | | |
| 104 | Momentan-Arbeitspunkt | | |
| 105 | Zeit | | |
| 106 | Messgröße | | |
| 107 | Längsschwingung | | |
| 108 | Querschwingung | | |
| 109 | Bestandshöhe | | |

## Patentansprüche

1. Landwirtschaftliche Arbeitsmaschine (1) eine Kennfeldsteuerung (98) umfassend, wobei die Kennfeldsteuerung (98) ein oder mehrere Kennfelder (97) umfasst und jedes Kennfeld (97) eingerichtet ist, Arbeitsparameter (60) der Prozessaggregate (59) der landwirtschaftlichen Arbeitsmaschine (1) zu optimieren, wobei die Kennfeldsteuerung (98) in ein der landwirtschaftlichen Arbeitsmaschine (1) zugeordnetes Fahrerassistenzsystem (80) integriert ist, wobei in einem Speicher (81) des Fahrerassistenzsystems (80) die Kennfelder (97) hinterlegt sind und eine Rechenvorrichtung (82) dazu eingerichtet ist mittels der hinterlegten Kennfelder (97) die Kennfeldsteuerung (98) zu betreiben, wobei die Kennfeldsteuerung dazu eingerichtet ist, dass das jeweilige Kennfeld (97) als Initialkennfeld (100) ausgeführt ist, wobei in dem Initialkennfeld (100) zumindest der Zusammenhang von Arbeitsparametern (60) eines Prozessaggregats (59) und Qualitätsparametern (101) durch Initialarbeitspunkte (102) beschrieben wird und dem jeweiligen Kennfeld (97) eine Steuerkennlinie (103) zugeordnet ist und die Steuerkennlinie (103) im Bereich des Minimums oder Maximums des jeweiligen Qualitätsparameters (101) liegt und wobei die Kennfeldsteuerung dazu eingerichtet ist, dass das Initialkennfeld (100) in einer Startkonfiguration im Fahrerassistenzsystem (80) der landwirtschaftlichen Arbeitsmaschine (1) hinterlegt ist oder vor einem Arbeitsbetrieb an dieses übergeben wird, wobei die Kennfeldsteuerung dazu eingerichtet ist, dass das Initialkennfeld (100) im Arbeitsbetrieb zyklisch aktualisiert und als neues Initialkennfeld (100) gespeichert wird.

2. Landwirtschaftliche Arbeitsmaschine eine Kennfeldsteuerung umfassend nach Anspruch 1,
**dadurch gekennzeichnet, dass**
im Arbeitsbetrieb in Abhängigkeit von Messgrößen (106) Momentan-Arbeitspunkte (104) ermittelt werden, die Momentan-Arbeitspunkte (104) in quasistationäre Arbeitspunkte (113) umgerechnet werden und die ermittelten quasistationären Arbeitspunkte (113) die Initialarbeitspunkte (102) oder die bereits aktualisierten Arbeitspunkte des jeweiligen Kennfeldes (97) überschreiben, wobei das Initialkennfeld (100) in ein aktualisiertes Kennfeld (119) gewandelt und eine aktualisierte Steuerkennlinie (120) des aktualisierten Kennfeldes (119) ermittelt wird.

3. Landwirtschaftliche Arbeitsmaschine eine Kennfeldsteuerung umfassend nach Anspruch 2,
**dadurch gekennzeichnet, dass**
mittels der aktualisierten Steuerkennlinie (120) optimierte Arbeitsparameter (60') ermittelt werden und die jeweils optimierten Arbeitsparameter (60') dem jeweiligen Prozessaggregat (59) vorgegeben werden.

4. Landwirtschaftliche Arbeitsmaschine eine Kennfeldsteuerung umfassend nach Anspruch 2,
**dadurch gekennzeichnet, dass**
die ermittelten Momentan-Arbeitspunkte (104) in einer ersten Datenmatrix (111) zwischengespeichert werden, wobei die Änderung des Wertes des jeweiligen Momentan-Arbeitspunktes (104) innerhalb eines Zeitintervalls (112) ermittelt wird und der Momentan-Arbeitspunkt (104) dann in einen quasistationären Arbeitspunkt (113) überführt wird, wenn sein Wert annährend unverändert, vorzugsweise konstant bleibt.

5. Landwirtschaftliche Arbeitsmaschine eine Kennfeldsteuerung umfassend nach Anspruch 4,
**dadurch gekennzeichnet, dass**
die ermittelten quasistationären Arbeitspunkte (113) in einer weiteren Datenmatrix (116) gesammelt werden, wobei in der weiteren Datenmatrix (116) eine bestimmte Anzahl quasistationärer Arbeitspunkte (113) gesammelt werden, vorzugsweise vier quasistationäre Arbeitspunkte (113), und in dieser Datenmatrix (116) für die gesammelten quasistationären Arbeitspunkte (113) in Analogie zum jeweiligen Initialkennfeld (100) zumindest die Abhängigkeiten zwischen einem Qualitätsparameter (101) und einem Arbeitsparameter (60) ermittelt werden.

6. Landwirtschaftliche Arbeitsmaschine eine Kennfeldsteuerung umfassend nach Anspruch 5,
**dadurch gekennzeichnet, dass**
die in der weiteren Datenmatrix (116) gesammelten quasistationären Arbeitspunkte (113) in eine Initialdatenmatrix (117) übernommen werden, wobei die Initialmatrix (117) dem Initialkennfeld (100) mit übernommenen quasistationären Arbeitspunkten (113) entspricht.

7. Landwirtschaftliche Arbeitsmaschine eine Kennfeldsteuerung umfassend nach Anspruch 6,
**dadurch gekennzeichnet, dass**
aus der Initialdatenmatrix (117) in einem Kennfeldaktualisierungsschritt (118) das aktualisierte Kennfeld (119) berechnet wird, wobei das aktualisierte Kennfeld (119) das Initialkennfeld (100) oder ein zuvor aktualisiertes Kennfeld (119) ersetzt und wobei in einem Schritt "Aktualisierung Steuerkennlinie" (120) für jedes aktualisierte Kennfeld (119) die Steuerkennlinie (103) neu berechnet wird.

8. Landwirtschaftliche Arbeitsmaschine eine Kennfeldsteuerung umfassend nach einem der vorhergehenden Ansprüche,
**dadurch gekennzeichnet, dass** das Fahrerassistenzsystem (80) weiter eingerichtet ist
a. die Messgrößen (106) zu ermitteln
b. zumindest aus den ermittelten Messgrößen (106) die Momentan Arbeitspunkte (104) abzuleiten
c. den Momentan-Arbeitspunkt (104) in den quasistationären Arbeitspunkt (113) umzurechnen
d. den quasistationären Arbeitspunkt (113) an das jeweils hinterlegte Initialkennfeld (100) oder das bereits aktualisierte Kennfeld (119) zu übergeben
f. in dem jeweiligen Kennfeld (97) einen Initialarbeitspunkt (102) oder einen bereits aktualisierten Arbeitspunkt durch einen quasistationären Arbeitspunkt (113) zu ersetzen
g. unter Berücksichtigung der eingefügten quasistationären Arbeitspunkte (113) ein aktualisiertes Kennfeld (119) zu berechnen
h. die Steuerkennlinie (103) des aktualisierten Kennfeldes (119) zu ermittelt
i. mittels der aktualisierten Steuerkennlinie (120) optimierte Arbeitsparameter (60') zu ermitteln
k. den jeweils optimierten Arbeitsparameter (60') dem jeweiligen Prozessaggregat (59) vorzugeben.

9. Landwirtschaftliche Arbeitsmaschine eine Kennfeldsteuerung umfassend nach Annspruch 8,
**dadurch gekennzeichnet, dass**
die landwirtschaftliche Arbeitsmaschine (1) als landwirtschaftliche Erntemaschine ausgeführt ist und der Arbeitsbetrieb ein Erntebetrieb ist.

10. Landwirtschaftliche Arbeitsmaschine eine Kennfeldsteuerung umfassend nach Anspruch 2,
**dadurch gekennzeichnet, dass**
die Messgrößen (106) die Längsschwingung (107) und/oder die Querschwingung (108) eines die landwirtschaftliche Erntemaschine (1) durchlaufenden Erntegutstromes (10) und/oder die Bestandshöhe (109) und/oder den Hydraulikdruck (110) oder Leistungsbedarf eines Haspelantriebsmotors (34) umfassen und die Messgrößen (106) in Qualitätsparameter (101) oder einen Erntegutdurchsatz umgerechnet werden.

11. Landwirtschaftliche Arbeitsmaschine eine Kennfeldsteuerung umfassend nach einem der Ansprüche 8 - 10,
**dadurch gekennzeichnet, dass**
ein oder mehrere Prozessaggregate (59) zusammen mit dem Fahrerassistenzsystem (80) einen Prozessaggregatautomat (96) bilden, indem im Speicher (81) des Fahrerassistenzsystems (80) die Kennfelder (97) hinterlegt sind und die Rechenvorrichtung (82) dazu eingerichtet ist mittels der hinterlegten Kennfelder (97) den Prozessaggregatautomat (96) als Kennfeldsteuerung (98) zu betreiben und der Prozessaggregatautomat (96) eingerichtet ist, Arbeitsparameter (60) des oder der Prozessaggregate (59) zu optimieren und die optimierten Arbeitsparameter (60') dem jeweiligen Prozessaggregat (59) vorzugeben

12. Landwirtschaftliche Arbeitsmaschine eine Kennfeldsteuerung umfassend nach Anspruch 11,
**dadurch gekennzeichnet, dass**
der Prozessaggregatautomat (96) als Vorsatzgeräteautomat (95) und/oder Bandschneidwerkautomat (89) und/oder als Dreschautomat (90) und/oder als Abscheideautomat (91) und/oder als Reinigungsautomat (92) und/oder als Häckselautomat (93) und/oder als Verteilautomat (94) ausgebildet sein kann und jeder der Prozessaggregatautomaten (96) Teilautomaten (99) ausbilden kann, wobei jeder der Teilautomaten (99) eingerichtet ist Arbeitsparameter (60) eines Prozessaggregates (69) zu optimieren und die optimierten Arbeitsparameter (60') dem jeweiligen Prozessaggregat (69) vorzugeben.

13. Landwirtschaftliche Arbeitsmaschine eine Kennfeldsteuerung umfassend nach einem der Ansprüche 11 oder 12,
**dadurch gekennzeichnet, dass**
das eine oder die mehreren dem jeweiligen Prozessaggregatautomat (96) oder dem jeweiligen Teilautomat (99) zugeordneten Kennfelder (97) den Zusammenhang von Arbeitsparametern (60) eines Prozessaggregats (69) und Qualitätsparametern (101) beschreiben.

14. Landwirtschaftliche Arbeitsmaschine eine Kennfeldsteuerung umfassend nach Anspruch 1,
**dadurch gekennzeichnet, dass**
das jeweilige Kennfeld (97) einen den Erntegutdurchsatz repräsentierenden Parameter, vorzugsweise die Schichthöhe (9), berücksichtigt.

15. Landwirtschaftliche Arbeitsmaschine eine Kennfeldsteuerung umfassend nach Anspruch 1,
**dadurch gekennzeichnet, dass**
der oder die Qualitätsparameter (101) des einen oder der mehreren Kennfelder (97) zumindest einen Schwingungskoeffizient (123) und/oder einen Abscheideverlust (124) umfassen.

16. Landwirtschaftliche Arbeitsmaschine eine Kennfeldsteuerung umfassend nach Anspruch 15,
**dadurch gekennzeichnet, dass**
der Schwingungskoeffizient (123) eine Schwankung des Erntegutdurchsatzes beschreibt und Mittel vorgesehen sind, die einen Erntegutdurchsatz und den die Schwankung des Erntegutdurchsatzes beschreibenden Schwingungskoeffizient (123) in einem vor den Dreschorganen (12) der landwirtschaftlichen Erntemaschine (1) liegenden Bereich ermitteln und der Abscheideverlust (124) den Kornverlust beschreibt, nämlich den aus der landwirtschaftlichen Erntemaschine (1) ausgeschiedenen Verlustkornanteil.

17. Landwirtschaftliche Arbeitsmaschine eine Kennfeldsteuerung umfassend nach Anspruch 16,
**dadurch gekennzeichnet, dass**
das jeweilige Kennfeld (97) den jeweiligen Arbeitsparameter (60) in Abhängigkeit vom Schwingungskoeffizienten (134) und der den Erntegutdurchsatz repräsentierenden Schichthöhe (9) beschreibt und/oder das jeweilige Kennfeld (97) den oder die jeweiligen Arbeitsparameter (60) zumindest in Abhängigkeit vom Abscheideverlust (124) beschreibt.

18. Landwirtschaftliche Arbeitsmaschine eine Kennfeldsteuerung umfassend nach Anspruch 1,
**dadurch gekennzeichnet, dass**
das Kennfeld (97) den Zusammenhang zwischen dem Qualitätsparameter Schwingungskoeffizient (123), dem den Erntegutdurchsatz repräsentierenden Parameter Schichthöhe (9) und einem Arbeitsparameter (60) beschreibt und die dem Kennfeld (97) zugeordnete Steuerkennlinie (103) im Bereich des Minimums des Schwingungskoeffizienten (123) liegt.

19. Landwirtschaftliche Arbeitsmaschine eine Kennfeldsteuerung umfassend nach Anspruch 11,
**dadurch gekennzeichnet, dass**
der Prozessaggregatautomat (96) als Bandschneidwerkautomat (89) ausgeführt ist und das Kennfeld (97) den Zusammenhang zwischen dem Qualitätsparameter Schwingungskoeffizient (123), dem den Erntegutdurchsatz repräsentierenden Parameter Schichthöhe (9) und dem Arbeitsparameter "Bandgeschwindigkeit Mittenband" (65, 45) oder dem Arbeitsparameter "Bandgeschwindigkeit rechtsseitiges und/oder linksseitiges Querförderband" (63-64, 44, 43) oder dem Arbeitsparameter Haspelhorizontalposition (68) und/oder Haspelvertikalposition (67) beschreibt und die dem jeweiligen Kennfeld (97) zugeordnete Steuerkennlinie (103) im Bereich des Minimums des Schwingungskoeffizienten (123) liegt

20. Landwirtschaftliche Arbeitsmaschine eine Kennfeldsteuerung umfassend nach Anspruch 1,
**dadurch gekennzeichnet, dass**
das Kennfeld (97) den Zusammenhang zwischen dem Qualitätsparameter Abscheideverlust (124) und einem oder mehreren Arbeitsparametern (60) beschreibt und die dem Kennfeld (97) zugeordnete Steuerkennlinie (103) im Bereich des Minimums des Abscheideverlusts (124) liegt.

21. Landwirtschaftliche Arbeitsmaschine eine Kennfeldsteuerung umfassend nach Anspruch 11,
**dadurch gekennzeichnet, dass**
der Prozessaggregatautomat (96) als Bandschneidwerkautomat (89) ausgeführt ist und das Kennfeld (97) den Zusammenhang zwischen dem Qualitätsparameter Abscheideverlust (124), dem den Erntegutdurchsatz repräsentierenden Parameter Hydraulikdruck (110) oder Leistungsbedarf eines Haspelantriebsmotors (34) / Haspelantriebszylinders (54, 55) und dem Arbeitsparameter Haspelhorizontalposition (68) und/oder Haspelvertikalposition (67) beschreibt und die dem Kennfeld (97) zugeordnete Steuerkennlinie (103) im Bereich des Minimums des Abscheideverlusts (124) liegt. 22.

22. Landwirtschaftliche Arbeitsmaschine eine Kennfeldsteuerung umfassend nach einem der vorhergehenden Ansprüche,
**dadurch gekennzeichnet, dass**
die Arbeitsparameter (60) die Schnittgeschwindigkeit (61), den Messerhub (62), die Bandgeschwindigkeit (63-65), die Einzugswalzenhorizontalposition (66), die Einzugswalzendrehzahl (49), die Haspelvertikalposition (67), die Haspelhorizontalposition (68), die Dreschtrommeldrehzahl (69), die Größe des Dreschspaltes (70), die Umlenktrommeldrehzahl (71), die Rotordrehzahl (72), die Schwingfrequenz (74 ,75) und Schwingungsrichtung der Siebebenen (74, 75), die Gebläsedrehzahl (76), die Drehzahl des Strohhäckslers (77), die Drehzahl der Verteileinrichtung (78) und den Abgabepunkt der Verteileinrichtung (79) umfassen kann.

23. Landwirtschaftliche Arbeitsmaschine eine Kennfeldsteuerung umfassend nach einem der Ansprüche 14-16,
**dadurch gekennzeichnet, dass**
die Anpassung des jeweiligen Kennfeldes (97) in Abhängigkeit vom Schwingungskoeffizienten (123) eine schnelle, eine dynamische Anpassung (121) des jeweiligen Kennfeldes (97) bewirkt während die Anpassung des jeweiligen Kennfeldes (97) in Abhängigkeit vom Abscheideverlust (124) eine langsame, eine träge Anpassung (122) des jeweiligen Kennfeldes (97) bewirkt.

24. Landwirtschaftliche Erntemaschine mit einem als Bandschneidwerk ausgebildeten Erntevorsatz nach Anspruch 23,
**dadurch gekennzeichnet, dass**
die Adaption des Kennfeldes eine Überlagerung einer dynamischen Kennfeldadaption "Schwingungskoeffizient" (123) und einer trägen Kennfeldadaption "Abscheideverlust" (124) umfasst.

## Claims

1. Agricultural machine (1) comprising a characteristic map controller (98),
wherein the characteristic map controller (98) comprises one or more characteristic maps (97) and each characteristic map (97) is designed to optimize working parameters (60) of the processing units (59) of the agricultural machine (1), wherein the characteristic map controller (98) is integrated in a driver assistance system (80) assigned to the agricultural machine (1), wherein the characteristic maps (97) are stored in a memory (81) of the driver assistance system (80), and a computing device (82) is designed to operate the characteristic map controller (98) by means of the stored characteristic maps (97),
wherein the characteristic map controller is designed such that the respective characteristic map (97) is realized as an initial characteristic map (100), wherein, in the initial characteristic map (100), at least the relationship between working parameters (60) of a processing unit (59) and quality parameters (101) is described by initial working points (102), and the respective characteristic map (97) is assigned a control characteristic (103), and the control characteristic (103) lies in the range of the minimum or maximum of the respective quality parameter (101), and wherein the characteristic map controller is designed such that the initial characteristic map (100) is stored in a start configuration in the driver assistance system (80) of the agricultural machine (1) or is transferred thereto before a working mode, the characteristic map controller being designed such that the initial characteristic map (100) is cyclically updated in the working mode and stored as a new initial characteristic map (100).

2. Agricultural machine comprising a characteristic map controller according to Claim 1,
**characterized in that**
in the working mode, current working points (104) are determined on the basis of measured variables (106), the current working points (104) are converted into quasi-stationary working points (113), and the determined quasi-stationary working points (113) overwrite the initial working points (102) or the already updated working points of the respective characteristic map (97), the initial characteristic map (100) being converted into an updated characteristic map (119) and an updated control characteristic (120) of the updated characteristic map (119) being determined.

3. Agricultural machine comprising a characteristic map controller according to Claim 2,
**characterized in that**
using the updated control characteristic (120), optimized working parameters (60') are determined and the respectively optimized working parameters (60') are specified to the respective processing unit (59).

4. Agricultural machine comprising a characteristic map controller according to Claim 2,
**characterized in that**
the determined current working points (104) are temporarily stored in a first data matrix (111), with the change in the value of the respective current working point (104) within a time interval (112) being determined and the current working point (104) then being converted to a quasi-stationary working point (113) if its value remains approximately unchanged, preferably constant.

5. Agricultural machine comprising a characteristic map controller according to Claim 4,
**characterized in that**
the determined quasi-stationary working points (113) are collected in a further data matrix (116), with a certain number of quasi-stationary working points (113), preferably four quasi-stationary working points (113), being collected in the further data matrix (116), and, in analogy to the respective initial characteristic map (100), at least the dependencies between a quality parameter (101) and a working parameter (60) being determined in said data matrix (116) for the collected quasi-stationary working points (113).

6. Agricultural machine comprising a characteristic map controller according to Claim 5,
**characterized in that**
the quasi-stationary working points (113) collected in the further data matrix (116) are transferred to an initial data matrix (117), the initial matrix (117) corresponding to the initial characteristic map (100) with the transferred quasi-stationary working points (113).

7. Agricultural machine comprising a characteristic map controller according to Claim 6,
**characterized in that**
the updated characteristic map (119) is calculated from the initial data matrix (117) in a characteristic map updating step (118), the updated characteristic map (119) replacing the initial characteristic map (100) or a previously updated characteristic map (119), and the control characteristic (103) being recalculated for each updated characteristic map (119) in an "updating control characteristic" step (120).

8. Agricultural machine comprising a characteristic map controller according to any one of the preceding claims,
**characterized**
**in that** the driver assistance system (80) is furthermore designed
a. to determine the measured variables (106)
b. to derive the current working points (104) at least from the determined measured variables (106)
c. to convert the current working point (104) into the quasi-stationary working point (113)
d. to transfer the quasi-stationary working point (113) to the respectively stored initial characteristic map (100) or the already updated characteristic map (119)
f. to replace an initial working point (102) or an already updated working point by a quasi-stationary working point (113) in the respective characteristic map (97)
g. to calculate an updated characteristic map (119) taking into account the inserted quasi-stationary working points (113)
h to determine the control characteristic (103) of the updated characteristic map (119)
i. to determine optimized working parameters (60') by means of the updated control characteristic (120)
k. to specify the respectively optimized working parameter (60') to the respective processing unit (59).

9. Agricultural machine comprising a characteristic map controller according to Claim 8,
**characterized in that**
the agricultural machine (1) is designed as an agricultural harvester and the working mode is a harvesting mode.

10. Agricultural machine comprising a characteristic map controller according to Claim 2,
**characterized in that**
the measured variables (106) comprise the longitudinal oscillation (107) and/or the transverse oscillation (108) of a harvested crop flow (10) passing through the agricultural harvester (1) and/or the crop height (109) and/or the hydraulic pressure (110) or power requirement of a reel drive motor (34), and the measured variables (106) are converted into quality parameters (101) or a harvested crop throughput.

11. Agricultural machine comprising a characteristic map controller according to any one of Claims 8 - 10, **characterized in that**
one or more processing units (59) together with the driver assistance system (80) form an automated processing unit (96) by the characteristic maps (97) being stored in the memory (81) of the driver assistance system (80), and the computing device (82) being designed to use the stored characteristic maps (97) to operate the automated processing unit (96) as a characteristic map controller (98), and the automated processing unit (96) being designed to optimize working parameters (60) of the processing unit or units (59) and to specify the optimized working parameters (60') to the respective processing unit (59).

12. Agricultural machine comprising a characteristic map controller according to Claim 11,
**characterized in that**
the automated processing unit (96) can be designed as an automated attachment (95) and/or an automated belt cutter (89) and/or as an automated thresher (90) and/or as an automated separator (91) and/or as an automated cleaner (92) and/or as an automated chopper (93) and/or as an automated distributor (94), and each of the automated processing units (96) can form automated sub-units (99), each of the automated sub-units (99) being designed to optimize working parameters (60) of a processing unit (69) and to specify the optimized working parameters (60') to the respective processing unit (69).

13. Agricultural machine comprising a characteristic map controller according to either of Claims 11 and 12, **characterized in that**
the one or more characteristic maps (97) assigned to the respective automated processing unit (96) or the respective automated sub-unit (99) describe the relationship between working parameters (60) of a processing unit (69) and quality parameters (101).

14. Agricultural machine comprising a characteristic map controller according to Claim 1,
**characterized in that**
the respective characteristic map (97) takes into account a parameter representing the harvested crop throughput, preferably the layer height (9).

15. Agricultural machine comprising a characteristic map controller according to Claim 1,
**characterized in that**
the quality parameter or parameters (101) of the one or more characteristic maps (97) comprises or comprise at least one oscillation coefficient (123) and/or a separating loss (124).

16. Agricultural machine comprising a characteristic map controller according to Claim 15,
**characterized in that**
the oscillation coefficient (123) describes a variation in the harvested crop throughput, and means are provided which determine a harvested crop throughput and the oscillation coefficient (123) describing the variation in the harvested crop throughput in a region located in front of the threshing members (12) of the agricultural harvester (1), and the separating loss (124) describes the grain loss, namely the portion of lost grain discarded from the agricultural harvester (1).

17. Agricultural machine comprising a characteristic map controller according to Claim 16,
**characterized in that**
the respective characteristic map (97) describes the respective working parameter (60) on the basis of the oscillation coefficient (134) and the layer height (9) representing the harvested crop throughput, and/or the respective characteristic map (97) describes the respective working parameter or parameters (60) at least on the basis of the separating loss (124).

18. Agricultural machine comprising a characteristic map controller according to Claim 1,
**characterized in that**
the characteristic map (97) describes the relationship between the oscillation coefficient (123) quality parameter, the layer height (9) parameter representing the harvested crop throughput and a working parameter (60), and the control characteristic (103) assigned to the characteristic map (97) lies in the range of the minimum of the oscillation coefficient (123).

19. Agricultural machine comprising a characteristic map controller according to Claim 11,
**characterized in that**
the automated processing unit (96) is designed as an automated belt cutter (89), and the characteristic map (97) describes the relationship between the oscillation coefficient (123) quality parameter, the layer height (9) parameter representing the harvested crop throughput and the "centre belt speed" (65, 45) working parameter or the "right-hand and/or left-hand transverse conveyor belt speed" (63-64, 44, 43) working parameter or the reel horizontal position (68) and/or reel vertical position (67) working parameter, and the control characteristic (103) assigned to the respective characteristic map (97) lies in the range of the minimum of the oscillation coefficient (123).

20. Agricultural machine comprising a characteristic map controller according to Claim 1,
**characterized in that**
the characteristic map (97) describes the relationship between the separating loss (124) quality parameter and one or more working parameters (60), and the control characteristic (103) assigned to the characteristic map (97) lies in the range of the minimum of the separating loss (124).

21. Agricultural machine comprising a characteristic map controller according to Claim 11,
**characterized in that**
the automated processing unit (96) is designed as an automated belt cutter (89), and the characteristic map (97) describes the relationship between the separating loss (124) quality parameter, the hydraulic pressure (110) or power requirement of a reel drive motor (34) / reel drive cylinder (54, 55) parameter representing the harvested crop throughput, and the reel horizontal position (68) and/or reel vertical position (67) working parameter, and the control characteristic (103) assigned to the characteristic map (97) lies in the range of the minimum of the separating loss (124).

22. Agricultural machine comprising a characteristic map controller according to any one of the preceding claims,
**characterized in that**
the working parameters (60) may comprise the cutting speed (61), the knife stroke (62), the belt speed (63-65), the feed roll horizontal position (66), the feed roll rotational speed (49), the reel vertical position (67), the reel horizontal position (68), the threshing drum rotational speed (69), the size of the threshing gap (70), the deflecting drum rotational speed (71), the rotor rotational speed (72), the oscillating frequency (74, 75) and direction of oscillation of the sieve planes (74, 75), the blower rotational speed (76), the rotational speed of the straw chopper (77), the rotational speed of the distributing device (78) and the delivery point of the distributing device (79).

23. Agricultural machine comprising a characteristic map controller according to any one of Claims 14-16, **characterized in that**
the adaptation of the respective characteristic map (97) on the basis of the oscillation coefficient (123) brings about a rapid, dynamic adaptation (121) of the respective characteristic map (97), while the adaptation of the respective characteristic map (97) on the basis of the separating loss (124) brings about a slow, sluggish adaptation (122) of the respective characteristic map (97).

24. Agricultural harvester having a harvesting attachment in the form of a belt cutter according to Claim 23,
**characterized in that**
the adaptation of the characteristic map comprises superimposing a dynamic "oscillation coefficient" (123) characteristic map adaptation and a sluggish "separating loss" (124) characteristic map adaptation.

## Revendications

1. Machine de travail agricole (1), comprenant une commande à diagrammes caractéristiques (98), ladite commande à diagrammes caractéristiques (98) comportant un ou plusieurs diagrammes caractéristiques (97), et chaque diagramme caractéristique (97) étant conçu pour optimiser des paramètres de travail (60) des organes de traitement (59) de la machine agricole (1), la commande à diagrammes caractéristiques (98) étant intégrée dans un système d'aide à la conduite (80) associé à la machine agricole (1), les diagrammes caractéristiques (97) étant enregistrés dans une mémoire (81) du système d'aide à la conduite (80), et un dispositif de calcul (82) étant conçu pour faire fonctionner la commande à diagrammes caractéristiques (98) à l'aide des diagrammes caractéristiques (97) enregistrés, la commande à diagrammes caractéristiques étant conçue de manière à ce que le diagramme caractéristique (97) respectif soit réalisé sous forme de diagramme caractéristique initial (100), sachant que dans le diagramme caractéristique initial (100), des points de fonctionnement initiaux (102) décrivent au moins la relation entre des paramètres de travail (60) d'un organe de traitement (59) et des paramètres de qualité (101), et une courbe caractéristique de commande (103) est associée au diagramme caractéristique (97) respectif, et la courbe caractéristique de commande (103) se situe dans la plage du minimum ou du maximum du paramètre de qualité (101) respectif, et sachant que la commande à diagrammes caractéristiques (98) est conçue de manière à ce que le diagramme caractéristique initial (100) soit enregistré dans une configuration de démarrage dans le système d'aide à la conduite (80) de la machine agricole (1) ou soit transmis à celui-ci avant un processus de travail, la commande à diagrammes caractéristiques étant conçue de manière à ce que, au cours du processus de travail, le diagramme caractéristique initial (100) fasse l'objet d'une actualisation cyclique et soit enregistré comme nouveau diagramme caractéristique initial (100).

2. Machine de travail agricole, comprenant une commande à diagrammes caractéristiques, selon la revendication 1,
**caractérisée en ce que**
au cours du processus de travail, des points de fonctionnement instantanés (104) sont déterminés en fonction de grandeurs de mesure (106), que les points de fonctionnement instantanés (104) sont convertis en points de fonctionnement quasi-stationnaires (113), et les points de fonctionnement quasi-stationnaires (113) déterminés remplacent les points de fonctionnement initiaux (102) ou les points de fonctionnement déjà actualisés du diagramme caractéristique (97) respectif, le diagramme caractéristique initial (100) étant transformé en diagramme caractéristique actualisé (119), et une courbe caractéristique de commande actualisée (120) du diagramme caractéristique actualisé (119) étant déterminée.

3. Machine de travail agricole, comprenant une commande à diagrammes caractéristiques, selon la revendication 2,
**caractérisée en ce que**
des paramètres de travail optimisés (60') sont déterminés à l'aide de la courbe caractéristique de commande actualisée (120), et les paramètres de travail optimisés (60') respectifs sont prédéfinis pour l'organe de traitement (59) respectif.

4. Machine de travail agricole, comprenant une commande à diagrammes caractéristiques, selon la revendication 2,
**caractérisée en ce que**
les points de fonctionnement instantanés (104) déterminés font l'objet d'un enregistrement intermédiaire dans une première matrice de données (111), sachant que la variation de la valeur du point de fonctionnement instantané (104) respectif est déterminée à l'intérieur d'un intervalle de temps (112), et le point de fonctionnement instantané (104) est ensuite transformé en un point de fonctionnement quasi-stationnaire (113) si sa valeur reste à peu près inchangée, de préférence si elle reste constante.

5. Machine de travail agricole, comprenant une commande à diagrammes caractéristiques, selon la revendication 4,
**caractérisée en ce que**
les points de fonctionnement quasi-stationnaires (113) déterminés sont collectés dans une matrice de données supplémentaire (116), sachant qu'un certain nombre de points de fonctionnement quasi-stationnaires (113), de préférence quatre points de fonctionnement quasi-stationnaires (113), sont collectés dans la matrice de données supplémentaire (116), et que dans cette matrice de données (116), on détermine pour les points de fonctionnement quasi-stationnaires (113) collectés, en analogie avec le diagramme caractéristique initial (100) respectif, au moins les interdépendances entre un paramètre de qualité (101) et un paramètre de travail (60).

6. Machine de travail agricole, comprenant une commande à diagrammes caractéristiques, selon la revendication 5,
**caractérisée en ce que**
les points de fonctionnement quasi-stationnaires (113) collectés dans la matrice de données supplémentaire (116) sont repris dans une matrice de données initiale (117), la matrice initiale (117) correspondant au diagramme caractéristique initial (100) avec les points de fonctionnement quasi-stationnaires (113) repris.

7. Machine de travail agricole, comprenant une commande à diagrammes caractéristiques, selon la revendication 6,
**caractérisée en ce que**
le diagramme caractéristique actualisé (119) est calculé à partir de la matrice de données initiale (117), dans une étape d'actualisation de diagramme caractéristique (118), le diagramme caractéristique actualisé (119) remplaçant le diagramme caractéristique initial (100) ou un diagramme caractéristique (119) précédemment actualisé, et la courbe caractéristique de commande (103) étant recalculée pour chaque diagramme caractéristique actualisé (119), dans une étape « actualisation de courbe caractéristique de commande » (120).

8. Machine de travail agricole, comprenant une commande à diagrammes caractéristiques, selon une des revendications précédentes,
**caractérisée en ce que**
le système d'aide à la conduite (80) est en outre conçu pour
a. déterminer les grandeurs de mesure (106)
b. dériver les points de fonctionnement instantanés (104), au moins à partir des grandeurs de mesure (106) déterminées
c. convertir le point de fonctionnement instantané (104) en point de fonctionnement quasi-stationnaire (113)
d. transférer le point de fonctionnement quasi-stationnaire (113) au diagramme caractéristique initial (100) respectif enregistré ou au diagramme caractéristique (119) déjà actualisé
f. remplacer, dans le diagramme caractéristique (97) respectif, un point de fonctionnement initial (102) ou un point de fonctionnement déjà actualisé par un point de fonctionnement quasi-stationnaire (113)
g. calculer un diagramme caractéristique actualisé (119) en prenant en compte les points de fonctionnement quasi-stationnaires (113) insérés
h. déterminer la courbe caractéristique de commande (103) du diagramme caractéristique actualisé (119)
i. déterminer des paramètres de travail optimisés (60'), à l'aide de la courbe caractéristique de commande actualisée (120)
k. prédéfinir le paramètre de travail optimisé (60') respectif pour l'organe de traitement (59) respectif.

9. Machine de travail agricole, comprenant une commande à diagrammes caractéristiques, selon la revendication 8,
**caractérisée en ce que**
la machine agricole (1) est réalisée sous forme de machine de récolte agricole, et le processus de travail est un processus de récolte.

10. Machine de travail agricole, comprenant une commande à diagrammes caractéristiques, selon la revendication 2,
**caractérisée en ce que**
les grandeurs de mesure (106) comprennent l'oscillation longitudinale (107) et/ou l'oscillation transversale (108) d'un flux de produits récoltés (10) traversant la machine de récolte agricole (1) et/ou la hauteur des cultures (109) et/ou la pression hydraulique (110) ou le besoin en puissance d'un moteur d'entraînement de rabatteur (34), et les grandeurs de mesure (106) sont converties en paramètres de qualité (101) ou en débit de produits récoltés.

11. Machine de travail agricole, comprenant une commande à diagrammes caractéristiques, selon une des revendications 8 à 10,
**caractérisée en ce que**
un ou plusieurs organes de traitement (59) forment avec le système d'aide à la conduite (80) un automate d'organes de traitement (96), par le fait que les diagrammes caractéristiques (97) sont enregistrés dans la mémoire (81) du système d'aide à la conduite (80) et le dispositif de calcul (82) est conçu pour faire fonctionner l'automate d'organes de traitement (96) en tant que commande à diagrammes caractéristiques (98), à l'aide des diagrammes caractéristiques (97) enregistrés, et que l'automate d'organes de traitement (96) est conçu pour optimiser des paramètres de travail (60) du ou des organes de traitement (59) et prédéfinir les paramètres de travail optimisés (60') pour l'organe de traitement (50) respectif.

12. Machine de travail agricole, comprenant une commande à diagrammes caractéristiques, selon la revendication 11,
**caractérisée en ce que**
l'automate d'organes de traitement (96) peut être réalisé comme automate de tête de récolte (95) et/ou automate de barre de coupe à tapis (89) et/ou comme automate de battage (90) et/ou comme automate de séparation (91) et/ou comme automate de nettoyage (92) et/ou comme automate de hachage (93) et/ou comme automate d'épandage (94), et que chacun des automates d'organes de traitement (96) peut former des sous-automates (99), chacun des sous-automates (99) étant conçu pour optimiser des paramètres de travail (60) d'un organe de traitement (69) et pour prédéfinir les paramètres de travail optimisés (60') pour l'organe de traitement (69) respectif.

13. Machine de travail agricole, comprenant une commande à diagrammes caractéristiques, selon une des revendications 11 ou 12,
**caractérisée en ce que**
le diagramme caractéristique (97) ou la pluralité de diagrammes caractéristiques (97) associés à l'automate d'organes de traitement (96) respectif ou au sous-automate (99) respectif décrivent la relation entre des paramètres de travail (60) d'un organe de traitement (69) et des paramètres de qualité (101).

14. Machine de travail agricole, comprenant une commande à diagrammes caractéristiques, selon la revendication 1,
**caractérisée en ce que**
le diagramme caractéristique (97) respectif prend en compte un paramètre représentant le débit de produits récoltés, de préférence une hauteur de couche (9).

15. Machine de travail agricole, comprenant une commande à diagrammes caractéristiques, selon la revendication 1,
**caractérisée en ce que**
le ou les paramètres de qualité (101) du ou des diagrammes caractéristiques (97) comprennent au moins un coefficient d'oscillation (123) et/ou une perte à la séparation (124).

16. Machine de travail agricole, comprenant une commande à diagrammes caractéristiques, selon la revendication 15,
**caractérisée en ce que**
le coefficient d'oscillation (123) décrit une variation du débit de produits récoltés, et qu'il est prévu des moyens qui déterminent un débit de produits récoltés ainsi que le coefficient d'oscillation (123) décrivant la variation du débit de produits récoltés, dans une zone située devant les organes de battage (12) de la machine de récolte agricole (1), et que la perte à la séparation (124) décrit la perte de grains, à savoir la fraction de grains perdus évacués de la machine de récolte agricole (1).

17. Machine de travail agricole, comprenant une commande à diagrammes caractéristiques, selon la revendication 16,
**caractérisée en ce que**
le diagramme caractéristique (97) respectif décrit le paramètre de travail (60) respectif en fonction du coefficient d'oscillation (134) et de la hauteur de couche (9) représentant le débit de produits récoltés, et/ou que le diagramme caractéristique (97) respectif décrit le ou les paramètres de travail (60) respectifs au moins en fonction de la perte à la séparation (124).

18. Machine de travail agricole, comprenant une commande à diagrammes caractéristiques, selon la revendication 1,
**caractérisée en ce que**
le diagramme caractéristique (97) décrit la relation entre le paramètre de qualité coefficient d'oscillation (123), le paramètre hauteur de couche (9) représentant le débit de produits récoltés et un paramètre de travail (60), et que la courbe caractéristique de commande (103) associée au diagramme caractéristique (97) se situe dans la plage du minimum du coefficient d'oscillation (123).

19. Machine de travail agricole, comprenant une commande à diagrammes caractéristiques, selon la revendication 11,
**caractérisée en ce que**
l'automate d'organes de traitement (96) est réalisé comme automate de barre de coupe à tapis (89) et le diagramme caractéristique (97) décrit la relation entre le paramètre de qualité coefficient d'oscillation (123), le paramètre hauteur de couche (9) représentant le débit de produits récoltés et le paramètre de travail « vitesse de bande du convoyeur central » (65, 45) ou le paramètre de travail « vitesse de bande du convoyeur transversal droit et/ou gauche » (63-64, 44, 43) ou le paramètre de travail position horizontale du rabatteur (68) et/ou position verticale du rabatteur (67), et que la courbe caractéristique de commande (103) associée au diagramme caractéristique (97) respectif se situe dans la plage du minimum du coefficient d'oscillation (123).

20. Machine de travail agricole, comprenant une commande à diagrammes caractéristiques, selon la revendication 1,
**caractérisée en ce que**
le diagramme caractéristique (97) décrit la relation entre le paramètre de qualité perte à la séparation (124) et un ou plusieurs paramètres de travail (60), et que la courbe caractéristique de commande (103) associée au diagramme caractéristique (97) se situe dans la plage du minimum de la perte à la séparation (124).

21. Machine de travail agricole, comprenant une commande à diagrammes caractéristiques, selon la revendication 11,
**caractérisée en ce que**
l'automate d'organes de traitement (96) est réalisé comme automate de barre de coupe à tapis (89) et le diagramme caractéristique (97) décrit la relation entre le paramètre de qualité perte à la séparation (124), le paramètre pression hydraulique (110) représentant le débit de produits récoltés ou le besoin en puissance d'un moteur d'entraînement de rabatteur (34)/vérin d'entraînement de rabatteur (54, 55) et le paramètre de travail position horizontale du rabatteur (68) et/ou position verticale du rabatteur (67), et que la courbe caractéristique de commande (103) associée au diagramme caractéristique (97) se situe dans la plage du minimum de la perte à la séparation (124).

22. Machine de travail agricole, comprenant une commande à diagrammes caractéristiques, selon une des revendications précédentes,
**caractérisée en ce que**
les paramètres de travail (60) peuvent comprendre la vitesse de coupe (61), la course des couteaux (62), la vitesse de bande (63-65), la position horizontale de rouleau d'alimentation (66), la vitesse de rotation de rouleau d'alimentation (49), la position verticale du rabatteur (67), la position horizontale du rabatteur (68), la vitesse de rotation du tambour batteur (69), la dimension de l'interstice de battage (70), la vitesse de rotation du tambour de déviation (71), la vitesse de rotation du rotor (72), la fréquence d'oscillation (74, 75) et la direction d'oscillation des plans de tamisage (74, 75), la vitesse de rotation du ventilateur (76), la vitesse de rotation du broyeur de paille (77), la vitesse de rotation du dispositif d'épandage (78) et le point de distribution du dispositif d'épandage (79).

23. Machine de travail agricole, comprenant une commande à diagrammes caractéristiques, selon une des revendications 14-16,
**caractérisée en ce que**
l'adaptation du diagramme caractéristique (97) respectif en fonction du coefficient d'oscillation (123) a pour effet une adaptation dynamique (121) rapide du diagramme caractéristique (97) respectif, tandis que l'adaptation du diagramme caractéristique (97) respectif en fonction de la perte à la séparation (124) a pour effet une adaptation inerte (122) lente du diagramme caractéristique (97) respectif.

24. Machine de récolte agricole, comprenant une tête de récolte réalisée sous forme de tablier de coupe à tapis selon la revendication 23,
**caractérisée en ce que**
l'adaptation du diagramme caractéristique comprend une superposition d'une adaptation de diagramme caractéristique dynamique « coefficient d'oscillation » (123) et d'une adaptation de diagramme caractéristique lente « perte à la séparation » (124).
